# EUROPEAN PATENT APPLICATION

(11) **EP 4 611 247 A1**
(43) Date of publication of application: **03.09.2025**
(21) Application number: 23883187.9
(22) Date of filing: 27.10.2023
(51) Int. Cl.: H02M 7/483, H02M 1/00, H02M 7/493, H02P 27/06, H02P 101/35

(54) **MODULAR MULTILEVEL CONVERTER AND POWER SYSTEM USING SAME**

(30) Priority: 27.10.2022 KR 20220139958; 16.06.2023 KR 20230077747
(71) Applicant: HD Korea Shipbuilding & Offshore Engineering Co., Ltd., Seongnam-si, Gyeonggi-do 13553 (KR); Hyundai Heavy Industries Co., Ltd., Ulsan 44032 (KR)
(72) Inventor: KANG, Nam Sook, Seongnam-si, Gyeonggi-do 13553 (KR); CHO, Young Ho, Seongnam-si, Gyeonggi-do 13553 (KR); KIM, Sang Hyun, Seongnam-si, Gyeonggi-do 13553 (KR); AHN, Sang Joon, Ulsan 44032 (KR)
(74) Representative: Grünecker Patent- und Rechtsanwälte PartG mbB
(86) International application number: PCT/KR2023/016938
(87) International publication number: WO 2024/091083

(57) **Abstract**

The present invention relates to a modular multilevel converter and a power system using same. The modular multilevel converter may comprise: a first converter unit having a leg according to a preset phase, wherein the leg has an upper arm and a lower arm, and each of the upper arm and the lower arm has a plurality of submodules connected in series so as to convert direct current power, which is input to an input terminal, into alternating current power having the phase and to output the alternating current power through a first output terminal; and a second converter unit that converts the direct current power, which is input to the input terminal, into alternating current power having a voltage level lower than the voltage level of the alternating current power output from the first converter and outputs the alternating current power through a second output terminal.

## Description

### [Technical Field]

Embodiments disclosed in this specification relate to a modular multilevel converter and a power system using the same.

### [Background Art]

In general, a modular multilevel converter (MMC) achieves a highvoltage output through the cascade connection between a plurality of converter valve submodule units. The modular multilevel converter does not require the direct cascade connection of a switching element and has low requirements for the trigger consistency of an element. Moreover, the modular multilevel converter has excellent scalability, low switching frequency, low operating loss, and high quality of an output voltage waveform.

Accordingly, the need to use the modular multilevel converter in the power system of a ship has emerged.

### [Disclosure]

### [Technical Problem]

Embodiments disclosed in the specification provide a power system using a modular multilevel converter.

Embodiments disclosed in the specification provide a power system for reducing the cost of operating a large electric propulsion ship.

Embodiments disclosed in the specification provide a power system easily interworking with a plurality of energy sources in operating a large electric propulsion ship.

Embodiments disclosed in the specification provide a power system for efficiently using limited space on a ship.

The technical problems to be solved by the present disclosure are not limited to the aforementioned problems, and any other technical problems not mentioned herein will be clearly understood from the following description by those skilled in the art to which the present disclosure pertains.

### [Technical Solution]

According to an embodiment disclosed in the specification, a modular multilevel converter may include a first converter device having a leg according to a preset phase, the leg having an upper arm and a lower arm, and each of the upper arm and the lower arm including a plurality of submodules connected in series so as to convert direct current (DC) power, which is input to an input terminal, into alternating current (AC) power having the phase and to output the AC power through a first output terminal, and a second converter device that converts the DC power, which is input to the input terminal, into AC power having a voltage level lower than a voltage level of AC power output from the first converter device and to output the AC power through a second output terminal.

In an embodiment, the second converter device may include at least one of a first low-voltage converter device composed of a plurality of additional submodules connected in series with the upper arm of the leg of the first converter device in a full-bridge method, a plurality of additional submodules adjacent to each other being connected in parallel with each other, and the plurality of additional submodules converting DC power of the input terminal into AC power having a voltage level lower than a voltage level of AC power output from the first converter device, or a second low-voltage converter device composed of a plurality of additional submodules connected in series with the lower arm of the leg of the first converter device in a full-bridge method, a plurality of additional submodules adjacent to each other being connected in parallel with each other, and the plurality of additional submodules converting DC power of the input terminal into AC power having a voltage level lower than a voltage level of AC power output from the first converter device.

In an embodiment, the modular multilevel converter may further include a controller that controls power conversion of the first low-voltage converter device and the second low-voltage converter device.

In an embodiment, the first converter device may be a bidirectional converter that converts AC power input to the first output terminal into preset DC power and outputs the preset DC power to the input terminal, when AC power is input to the first output terminal.

In an embodiment, the first converter device and the second converter device may convert and output DC power of the input terminal into three-phase AC power with different voltage levels.

According to an embodiment disclosed in the specification, a power system may include a first modular multilevel converter having multiple output terminals, a propulsion motor that receives AC power from a first output terminal among the multiple output terminals, a low-voltage alternating current (LVAC) distribution that receives AC power from a second output terminal among the multiple output terminals, and a medium-voltage direct current (MVDC) distribution that supplies DC power to the first modular multilevel converter.

In an embodiment, a voltage level of AC power output through the second output terminal may be lower than a voltage level of AC power output through the first output terminal.

In an embodiment, DC power supplied to the first modular multilevel converter through the MVDC distribution may be generated directly or indirectly by at least one of an energy storage system, a fuel cell system, or a generator.

In an embodiment, the power system may further include a second modular multilevel converter that electrically connects the generator and the MVDC distribution and including at least one output terminal.

In an embodiment, the second modular multilevel converter may have a third output terminal for outputting DC power to the MVDC distribution, and a fourth output terminal for outputting AC power to a service load distribution.

In an embodiment, the second modular multilevel converter may have a fifth output terminal for outputting DC power to the MVDC distribution, and a sixth output terminal for outputting DC power to a service load distribution.

In an embodiment, a voltage level of DC power output through the sixth output terminal may be lower than a voltage level of DC power output through the fifth output terminal.

In an embodiment, the second output terminal and the LVAC distribution may be electrically connected through an isolation transformer.

In an embodiment, the isolation transformer may be one of a two-winding transformer and a three-winding transformer.

In an embodiment, the power system may further include a bus tie connected to the MVDC distribution and exchanging DC power with another power system.

### [Advantageous Effects]

Embodiments disclosed in the specification may provide a power system using a modular multilevel converter.

Embodiments disclosed in the specification may provide a power system for reducing the cost of operating a large electric propulsion ship.

Embodiments disclosed in the specification may provide a power system easily interworking with a plurality of energy sources in operating a large electric propulsion ship.

Embodiments disclosed in the specification may provide a power system for efficiently using limited space on a ship.

Besides, a variety of effects directly or indirectly understood through the present disclosure may be provided.

### [Description of Drawings]

FIG. 1 is a diagram schematically illustrating a modular multilevel converter, according to an embodiment disclosed in the specification.
FIG. 2 is a schematic circuit diagram of a submodule of a modular multilevel converter, according to an embodiment disclosed in the specification.
FIG. 3 is a diagram schematically illustrating a modular multilevel converter, according to an embodiment disclosed in the specification.
FIGS. 4A to 4C are schematic diagrams of a modular multilevel converter and a power system using the same, according to an embodiment disclosed in the specification.
FIGS. 5A and 5B are schematic diagrams of a power system in which a modular multilevel converter having a single output terminal according to an embodiment disclosed in the specification is placed between an MVDC distribution and a propulsion motor.
FIGS. 6A to 6C are schematic diagrams of a power system in which a modular multilevel converter according to an embodiment disclosed in the specification is additionally placed between an MVDC distribution and a generator.
FIGS. 7A and 7B are schematic diagrams of a power system in which a modular multilevel converter having multiple output terminals according to an embodiment disclosed in the specification is placed between an MVDC distribution and a propulsion motor.
FIGS. 8A to 8C are schematic diagrams of a power system in which a modular multilevel converter according to an embodiment disclosed in the specification is additionally placed between an MVDC distribution and a generator.
FIGS. 9A and 9B are schematic diagrams of a power system in which a modular multilevel converter having multiple output terminals according to an embodiment disclosed in the specification is placed between an MVDC distribution and a propulsion motor.
FIGS. 10A to 10C are schematic diagrams of a power system in which a modular multilevel converter according to an embodiment disclosed in the specification is additionally placed between an MVDC distribution and a generator.
FIGS. 11A to 11E are schematic diagrams of a power system in which a modular multilevel converter according to an embodiment disclosed in the specification is placed between an MVAC distribution and a propulsion motor.
FIG. 12 is a schematic diagram illustrating a modular multilevel converter and a rectifier, according to an embodiment disclosed in the specification.
FIGS. 13A to 13C are schematic diagrams of a power system in which a modular multilevel converter according to an embodiment disclosed in the specification is placed between an MVDC distribution and a generator.
FIGS. 14A to 14J are schematic diagrams of a power system in which a modular multilevel converter according to an embodiment disclosed in the specification is additionally placed between a MVDC distribution and a propulsion motor.
FIGS. 15A to 15D schematically illustrate a power system, in which grids of essential loads and service loads are separated from each other, according to an embodiment disclosed in the specification.
With regard to description of drawings, the same or similar components may be marked by the same or similar reference numerals.

### [Mode for Invention]

Hereinafter, exemplary embodiments of the present disclosure will be described in detail with reference to the accompanying drawings. In adding reference numerals to components of each drawing, it should be noted that the same components include the same reference numerals, although they are indicated on another drawing. In describing an embodiment disclosed in the specification, detailed descriptions associated with well-known functions or configurations will be omitted when they may make subject matters of the present disclosure unnecessarily obscure.

In describing elements of exemplary embodiments of the present disclosure, the terms first, second, A, B, (a), (b), and the like may be used herein. These terms are only used to distinguish one element from another element, but do not limit the corresponding elements irrespective of the nature, order, or priority of the corresponding elements. Furthermore, unless otherwise defined, all terms including technical and scientific terms used herein are to be interpreted as is customary in the art to which the present disclosure belongs. It will be understood that terms used herein should be interpreted as including a meaning that is consistent with their meaning in the context of the present disclosure and the relevant art and will not be interpreted in an idealized or overly formal sense unless expressly so defined herein.

Hereinafter, embodiments disclosed in the specification will be described in detail with reference to drawings.

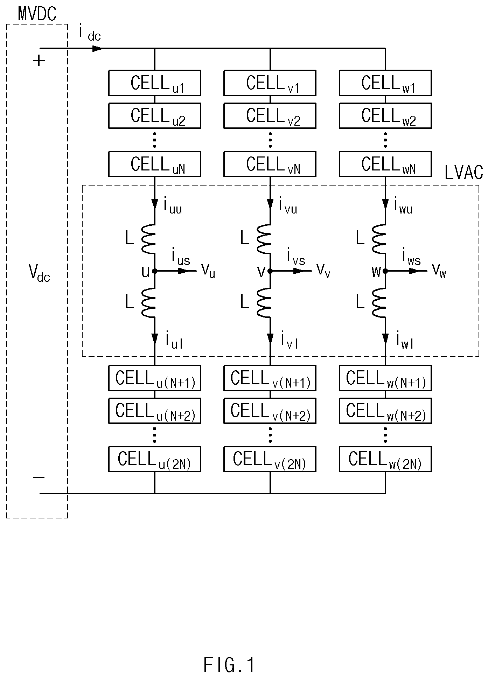

FIG. 1 is a schematic diagram illustrating a modular multilevel converter having a single output terminal.

Referring to FIG. **1****,** a modular multilevel converter having a single output terminal may include a plurality of submodule (SM) cells, and may drive a load (e.g., a propulsion motor, etc.) by converting input DC power (e.g., medium-voltage direct current (MVDC)) into AC power (e.g., low-voltage alternating current (LVAC)) having a phase and output the AC power through the single output terminal.

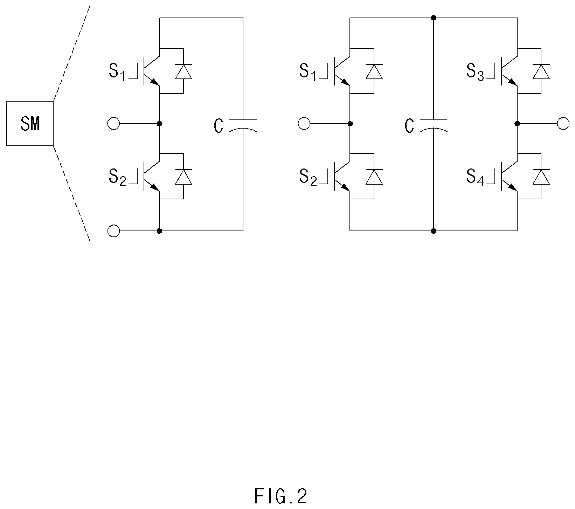

FIG. 2 is a schematic circuit diagram of a submodule of a modular multilevel converter.

Referring to FIG. 2, a submodule SM may be implemented in a halfwave-bridge or full-wave-bridge manner, and may also be implemented as another circuit. The submodule SM may perform a switching operation under the control of a controller.

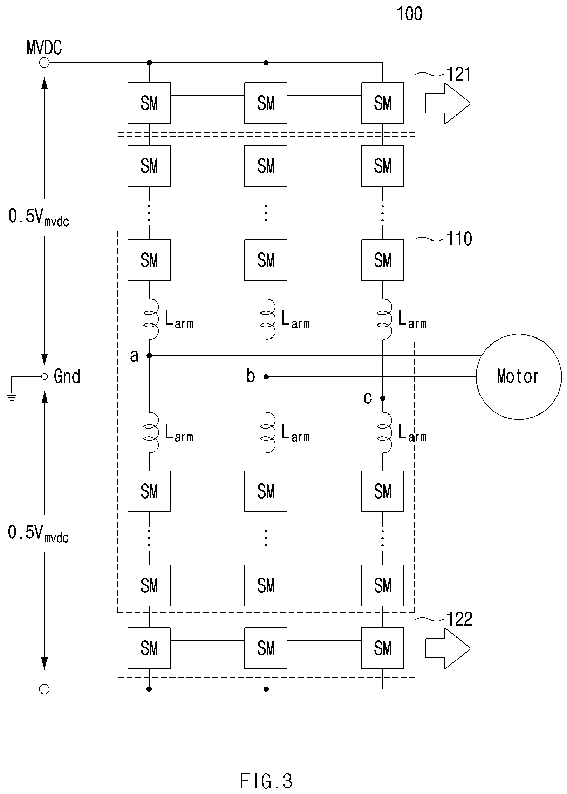

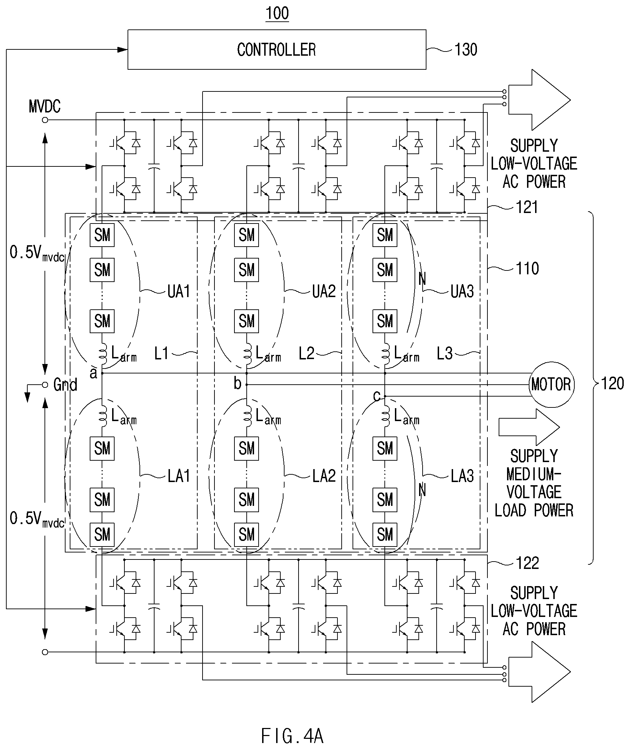

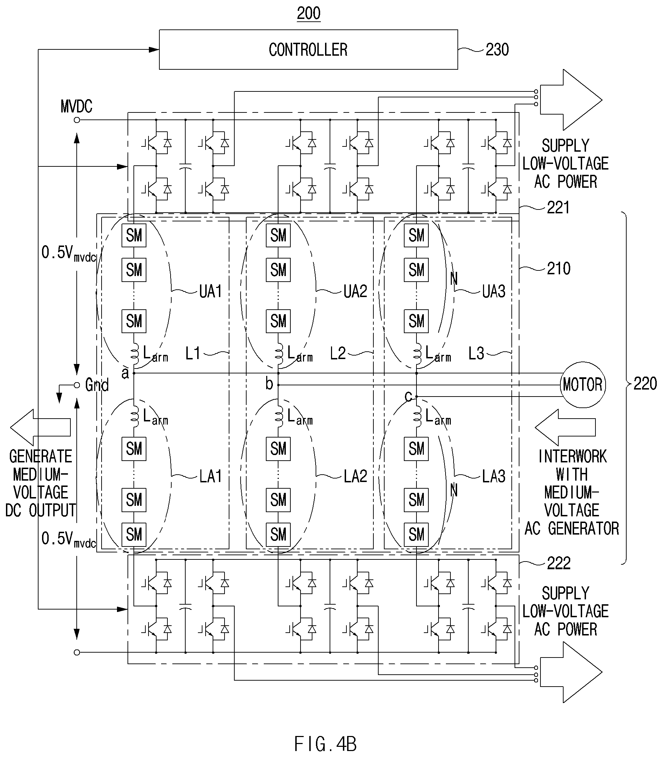

For reference, the submodule illustrated in FIG. 2 may be equipped in a modular multilevel converter having a single output terminal of FIG. **1****,** but is not limited thereto, and may also be equipped in a modular multilevel converter having multiple output terminals to be described later with reference to FIGS. 3, 4A, and FIG. 4B.

FIG. 3 is a schematic diagram illustrating a modular multilevel converter 100 having multiple output terminals, according to an embodiment disclosed in the specification. That is, it may be understood that the modular multilevel converter illustrated in FIG. 1 has a single output terminal, but a modular multilevel converter illustrated in FIG. 3 has multiple output terminals.

Referring to FIG. 3, the modular multilevel converter 100 may include a first converter device 110 and second converter devices 121 and 122.

For example, the first converter device 110 may convert the DC power input to the input terminal into AC power having a phase and may output the AC power to an output terminal. For example, the first converter device 110 may have a plurality of legs according to preset phases. In this case, each of the plurality of legs may have an upper arm and a lower arm, and each of the upper arm and the lower arm may include the plurality of submodules SM. Hereinafter, this will be described in more detail in the description of FIG. 4A.

For reference, in FIG. 3, a motor is illustrated as an example of a load for convenience, but the type of load that receives power from the modular multilevel converter is not limited to a motor. Other types of loads other than the motor may receive power from the modular multilevel converter.

In the meantime, separately from the AC power from each leg of the first converter device 110, the second converter devices 121 and 122 may convert the DC power input to the input terminal into power (AC power or DC power) having a voltage level lower than a voltage level of the AC power output from the first converter device 110.

For example, the second converter device may include at least one of the first low-voltage converter device 121 and the second low-voltage converter device 122. For reference, for better understanding, FIG. 3 illustrates both the first low-voltage converter device 121 and the second low-voltage converter device 122, but this does not exclude the fact that the second converter device is located at only one of upper or lower ends of the first converter device 110. In other words, the first low-voltage converter device 121 may be located only on the upper end of the first converter device 110, or the second low-voltage converter device 122 may be located only on the lower end of the first converter device 110.

For example, the first low-voltage converter device 121 may convert DC power from the input terminal into power having a voltage level lower than the voltage level of AC power output from the first converter device 110 and may output the power having the voltage level.

For example, the second low-voltage converter device 122 may convert DC power from the input terminal into AC power having a voltage level lower than the voltage level of AC power output from the first converter device 110 and may output the AC power having the voltage level.

That is, the modular multilevel converter 100 according to an embodiment disclosed in the specification may have multiple output terminals (a first output terminal corresponding to the first converter device and a second output terminal corresponding to the second converter device), thereby simultaneously supplying low voltage power and medium-voltage power.

For reference, depending on the structure of the second converter device, the type of a power output from the output terminal (i.e., an auxiliary output terminal) of the second converter device may be different. Among them, a modular multilevel converter having an auxiliary output terminal that outputs AC power will be described later with reference to FIG. 4A.

FIG. 4A is a schematic diagram illustrating the modular multilevel converter 100 having multiple output terminals, according to an embodiment disclosed in the specification.

Referring to FIG. 4A, the modular multilevel converter 100 may include the first converter device 110 and a second converter device 120. In this case, the modular multilevel converter 100 may further include a controller 130.

For example, the first converter device 110 may have legs L1, L2, and L3 according to preset phases. The legs L1, L2, and L3 may have upper arms UA1, UA2, and UA3 and lower arms LA1, LA2, and LA3, respectively. The upper arms UA1, UA2, and UA3 and the lower arms LA1, LA2, and LA3 may each have a plurality of submodules SM connected in series to convert input DC power into AC power having phases.

For example, the DC power input to the first converter device 110 may be medium-voltage DC power MVDC. The first converter device 110 may convert the DC power into AC power to drive the load. In this case, the converted AC power may be three-phase AC power.

For reference, in FIG. 4A, a motor is illustrated as an example of a load for convenience, but the type of load that receives power from the modular multilevel converter is not limited to a motor. Other types of loads other than the motor may receive power from the modular multilevel converter.

In this case, the first to third legs L1, L2, and L3 may have the upper arms UA1, UA2, and UA3 and the lower arms LA1, LA2, and LA3, respectively. The upper arms UA1, UA2, and UA3 and the lower arms LA1, LA2, and LA3, which respectively included in the first to third legs L1, L2, and L3, may have 'N' submodules SM (where 'N' is a natural number) connected in series. The voltage of the upper arm or the lower arm of one leg may be the voltage (Vmvdc) of the medium-voltage DC power MVDC that is input to an input terminal. A voltage between ground (gnd) and the upper end and lower end of DC power terminals may be displayed as 0.5 Vmvdc.

For example, the first converter device 110 may convert the DC power input to the input terminal into AC power having a phase and may output the AC power to an output terminal.

For reference, the submodule is described with reference to FIG. 2, and thus redundant descriptions will be omitted.

In the meantime, separately from AC power from each of the legs L1, L2, and L3 of the first converter device 110, the second converter device 120 may convert the DC power input to the input terminal into AC power having a voltage level lower than a voltage level of the AC power output from the first converter device 110.

For example, the second converter device 120 may include the first low-voltage converter device 121 and the second low-voltage converter device 122.

For example, the first low-voltage converter device 121 may be implemented with a plurality of additional submodules configured in a full-bridge configuration. Each additional submodule may be connected in series with each of the upper arms UA1, UA2, and UA3 respectively corresponding to the legs L1, L2, and L3 of the first converter device 110. Moreover, each additional submodule connected in series with the upper arms UA1, UA2, and UA3 may be connected in parallel with each other. In this case, the first low-voltage converter device 121 may convert DC power from the input terminal into AC power having a voltage level lower than the voltage level of AC power output from the first converter device 110 and may output the AC power having the voltage level.

For example, the second low-voltage converter device 122 may be implemented with a plurality of additional submodules configured in a full-bridge configuration. Each additional submodule may be connected in series with each of the lower arms LA1, LA2, and LA3 respectively corresponding to the legs L1, L2, and L3 of the first converter device 110. Moreover, each additional submodule connected in series with the lower arms LA1, LA2, and LA3 may be connected in parallel with each other. The second low-voltage converter device 122 may convert DC power from the input terminal into AC power having a voltage level lower than the voltage level of AC power output from the first converter device 110 and may output the AC power having the voltage level.

Accordingly, the modular multilevel converter 100 according to an embodiment disclosed in the specification may supply low-voltage AC power and medium-voltage AC power at the same time. In other words, the modular multilevel converter 100 according to an embodiment disclosed in the specification may have multiple output terminals (a first output terminal and a second output terminal).

The modular multilevel converter 100 according to an embodiment disclosed in the specification may further include the controller 130. The controller 130 may control a power conversion operation of the first converter device 110 and the second converter device 120.

For example, the controller 130 may control the switching operation of the first low-voltage converter device 121 and the second low-voltage converter device 122 of the second converter device 120. Each switching circuit of the first low-voltage converter device 121 and the second low-voltage converter device 122 may convert and output the power of the corresponding upper arm or the corresponding lower arm into AC power having a lower voltage level than the AC power of the first converter device 110 by performing a switching operation under the control of the controller 130.

In this case, the controller 130 may be composed of at least one processing unit and a memory. For example, the processing unit may include a central processing unit (CPU), a graphic processing unit (GPU), a microprocessor, an application specific integrated circuit (ASIC), field programmable gate arrays (FPGA) and the like, and may have a plurality of cores. The memory may be a volatile memory (e.g., a random access memory (RAM) or the like), a nonvolatile memory (e.g., a read only memory (ROM), a flash memory, or the like), or a combination thereof.

FIG. 4B is a schematic diagram of a modular multilevel converter, according to another embodiment disclosed in the specification.

Referring to FIG. 4B, a modular multilevel converter 200 according to another embodiment disclosed in the specification may include a first converter device 210, a second converter device 220, and a controller 230.

For example, the first converter device 210 illustrated in FIG. 4B may have the same configuration as the first converter device 110 illustrated in FIG. 4A. For example, the first converter device 210 may be a bidirectional converter. When the first converter device 210 is a bidirectional converter, when medium-voltage AC power from a generator is input to the output terminal in FIG. 4A, the first converter device 210 may output medium-voltage DC power to the input terminal in FIG. 4A. Low-voltage DC power may mean DC power less than 1500 V. Medium-voltage DC power may mean DC power greater than 1500 V and less than 100 kV.

In other words, the modular multilevel converter 100 in FIG. 4A may receive DC power, may output AC power through a first output terminal, and may output the AC power through a second output terminal. The modular multilevel converter 200 in FIG. 4B may receive input AC power, may output DC power through the first output terminal (a location corresponding to the input terminal in FIG. 4A), and may output the AC power through the second output terminal (a location corresponding to the second output terminal in FIG. 4A).

The configuration and the operation of each of the first converter device 210, the second converter device 220, and the controller 230 are the same as those in the description of FIG. 4A, and thus descriptions of the configuration and the operation are omitted.

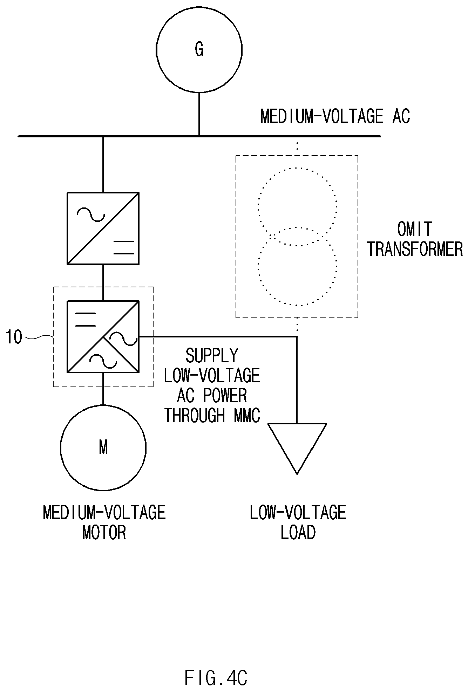

FIG. 4C is a schematic diagram of a power system using a modular multilevel converter having multiple output terminals, according to one embodiment disclosed in the specification.

For example, a power system using a modular multilevel converter having multiple output terminals according to an embodiment disclosed in the specification may supply low-voltage AC power corresponding to a low-voltage load requiring low-voltage AC power through an auxiliary output terminal without a conventional transformer, as illustrated in FIG. 4C.

In this way, the low-voltage AC power may be supplied to the low-voltage load without installing an additional transformer, thereby reducing costs and reducing the weight and volume of equipment.

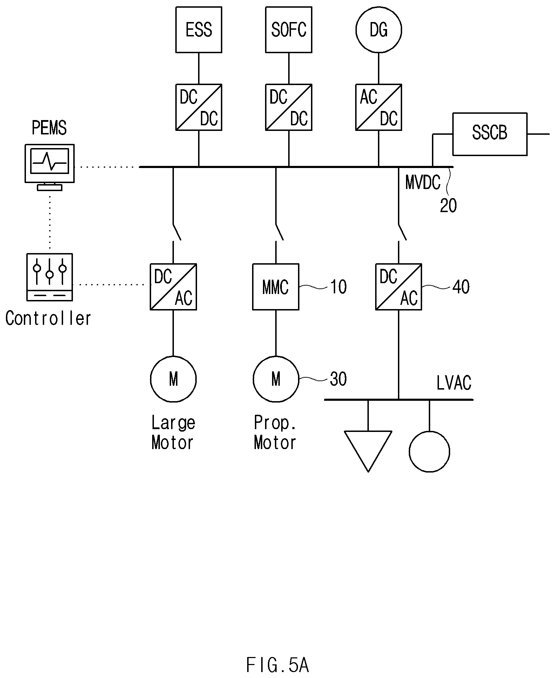

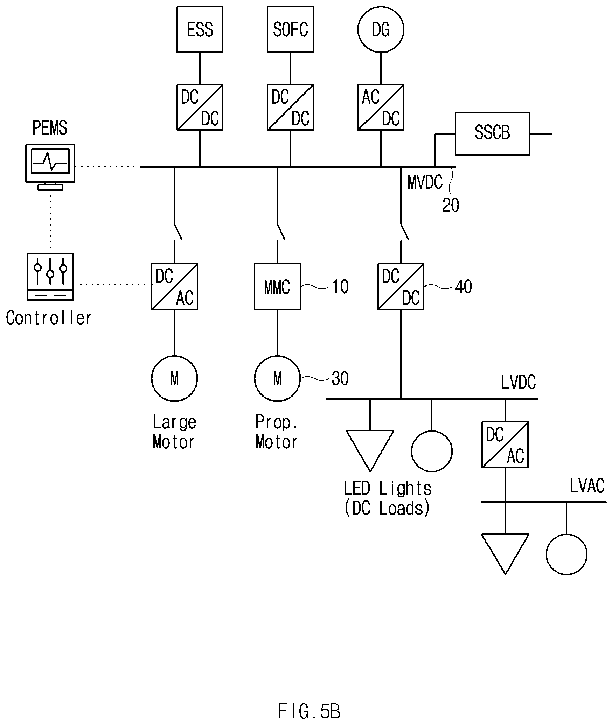

FIGS. 5A and 5B are schematic diagrams of a power system using a modular multilevel converter (MMC), according to an embodiment disclosed in the specification.

For reference, like the modular multilevel converter illustrated in FIG. 1, a modular multilevel converter 10 illustrated in FIG. 5A to FIG. 5B may be a modular multilevel converter having a single output terminal.

For reference, the modular multilevel converter 10 having a single output terminal may be used between a medium-voltage direct current (MVDC) distribution 20 and a propulsion motor 30 as shown in FIGS. 5A and 5B, whereas a conventional inverter/converter or a modular multilevel converter may be used between the MVDC distribution 20 and the other devices (e.g., a generator, a large motor, and the like).

Referring to FIGS. 5A and 5B, a power system using the modular multilevel converter 10 having a single output terminal according to an embodiment disclosed in the specification may include the MVDC distribution 20, the modular multilevel converter 10, and the propulsion (Prop.) motor 30. In this case, the modular multilevel converter 10 may be placed between the MVDC distribution 20 and the propulsion motor 30.

When a general converter, not the modular multilevel converter 10, is used between the MVDC distribution 20 and the propulsion motor 30, the capacity of power that the converter needs to handle becomes too large, and high-specification elements are required to handle the capacity of power, which inevitably leads to issues with parts supply and cost.

On the other hand, the modular multilevel converter includes multiple submodules. Accordingly, even when the modular multilevel converter is connected to the large capacity of power (distribution), the capacity that each submodule needs to handle is reduced.

Accordingly, elements having universal specifications may be utilized by using the modular multilevel converter in a large electric propulsion vessel with a propulsion motor requiring the large capacity of power, thereby securing competitiveness in terms of parts supply and price.

In addition, because the modular multilevel converter is capable of being used by adding or removing submodules flexibly depending on situations, the modular multilevel converter is advantageous in terms of extensibility.

Moreover, interworking with other energy sources (power supply sources) becomes easier, and system soundness may be improved, by applying MVDC distribution to large electric propulsion ships.

In the meantime, as illustrated in FIGS. 5A and 5B, when the modular multilevel converter 10 positioned between the MVDC distribution 20 and the propulsion motor 30 has a single output terminal, an additional inverter may be required to supply power to a service load or the LVAC distribution (LVAC) corresponding thereto.

For example, as shown in FIG. 5A, power may be delivered from the MVDC distribution 20 to the LVAC distribution (LVAC) through a DC/AC power conversion device 40.

For another example, as shown in FIG. 5B, power may be primarily delivered from the MVDC distribution 20 to the LVDC distribution (LVDC) through the DC/DC power conversion device 40, and power may be secondarily delivered from the LVDC distribution (LVDC) to the LVAC distribution (LVAC) through the DC/AC power conversion device.

Furthermore, a power supply source that supplies power may be additionally included. For example, as illustrated in FIGS. 5A and 5B, at least part of an energy storage system (ESS), a fuel cell system (SOFC), a diesel generator (DG), and a shaft generator may be additionally included.

For example, the capacity (e.g., hundreds of kW to several MW) of a large motor may be less than that of a propulsion motor (e.g., 10 MW or more). In this case, the large motor may be connected differently depending on the type of line. When the large motor is connected to MVDC, a step of increasing a voltage when the voltage is transferred from Aft to Fwd may be omitted. Accordingly, considering that the size of a large-capacity medium-voltage motor is smaller than that of a large-capacity low-voltage motor, a medium-voltage motor may be used, thereby reducing the size of the motor.

For example, a power conversion device may be used to transfer power supplied from a power supply source to the MVDC distribution 20. In this case, as shown in FIG. 5A and FIG. 5B, a general inverter or converter may be used as the power conversion device, but is not limited thereto. A modular multilevel converter having a single output terminal or multiple output terminals may be used.

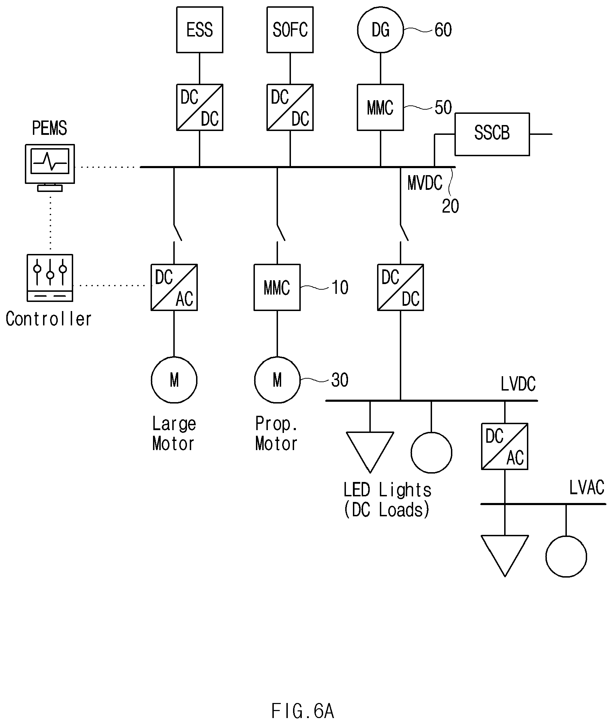

FIGS. 6A to 6C illustrate an embodiment in which a modular multilevel converter 50 having a single output terminal or multiple output terminals is additionally placed between the MVDC distribution 20 and a generator DG 60, in a power system in which the modular multilevel converter 10 having a single output terminal as described through FIGS. 5A and 5B is placed between the MVDC distribution 20 and the propulsion motor 30.

For reference, the modular multilevel converter 10 having a single output terminal may be used between the MVDC distribution 20 and the propulsion motor 30 as shown in FIGS. 6A to 6C, whereas a general inverter/converter or a modular multilevel converter may be used between the MVDC distribution 20 and the other devices (e.g., an energy storage system, a large motor, and the like) other than the generator 60.

First, referring to FIG. 6A, it may be seen that the modular multilevel converter 50 having a single output terminal is additionally placed between the MVDC distribution 20 and the generator 60. As described above, the modular multilevel converter includes multiple submodules. Accordingly, even when the modular multilevel converter is connected to the large capacity of power (a generator), the capacity that each submodule needs to handle is reduced.

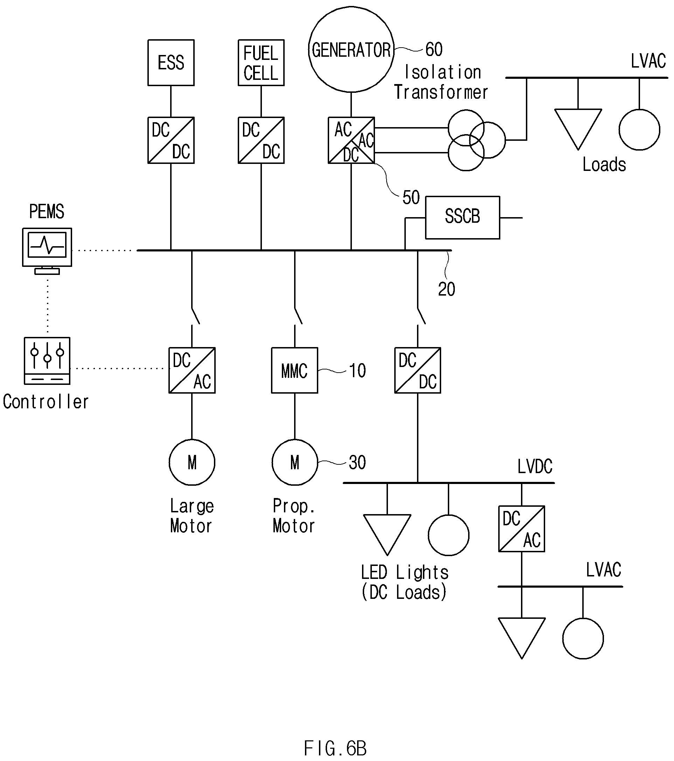

Moreover, referring to FIG. 6B, it may be seen that the modular multilevel converter 50 having multiple output terminals is additionally placed between the MVDC distribution 20 and the generator 60. In this case, it may be seen that a main output terminal (a medium-voltage DC power output) of the modular multilevel converter 50 with multiple output terminals transmits power to the MVDC distribution 20, and the auxiliary output terminal (a low-voltage AC power output) transmits power to the service load (LVAC). For example, the modular multilevel converter 50 having multiple output terminals illustrated in FIG. 6B may be identical/similar to the structure and operation of the modular multilevel converter 200 illustrated in FIG. 4B.

In this case, to prevent accidents, the modular multilevel converter 50 having multiple output terminals and the service load (LVAC) may be electrically connected through an isolation transformer. In this case, the isolation transformer may be either a two-winding transformer or a three-winding transformer. For reference, the two two-winding transformers may be required, and the one three-winding transformer may be required.

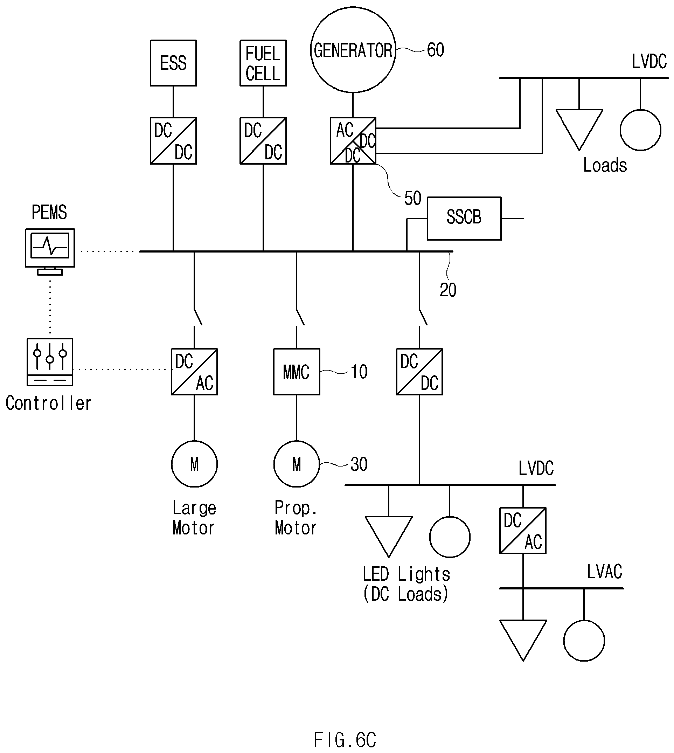

Moreover, referring to FIG. 6C, it may be seen that the modular multilevel converter 50 having multiple output terminals is additionally placed between the MVDC distribution 20 and the generator 60. In this case, it may be seen that a main output terminal (a medium-voltage DC power output) of the modular multilevel converter 50 with multiple output terminals transmits power to the MVDC distribution 20, and the auxiliary output terminal (a low-voltage DC power output) transmits power to the service load (LVDC).

Also, the power system according to an embodiment disclosed in the specification may additionally include a bus tie for exchanging power with another power system.

For example, the bus tie may be located between a first power system and a second power system, and the bus tie may include a bus tie breaker for controlling connection and disconnection between the first power system and the second power system. In this case, the bus tie breaker may be a solid state circuit breaker (SSCB) as shown in FIG. 5A, but is not limited thereto, and may also be a mechanical breaker.

For reference, among the descriptions given below, descriptions the same as the descriptions given above with reference to FIGS. 1 to 6C will be easily understood by those skilled in the art, and thus the descriptions will be omitted.

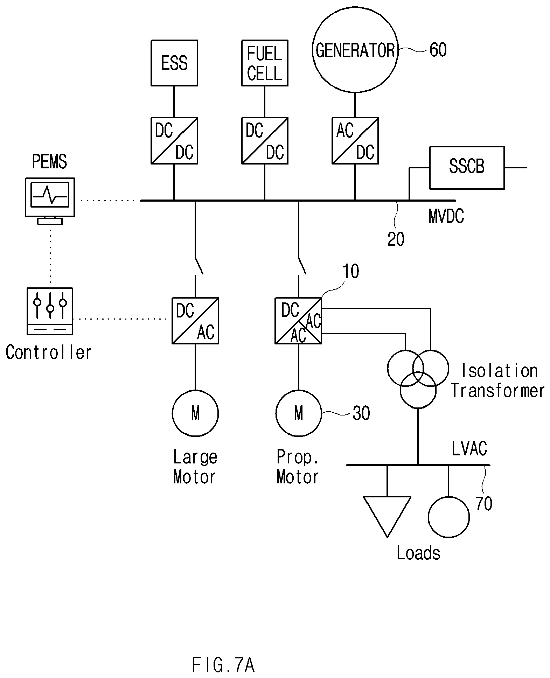

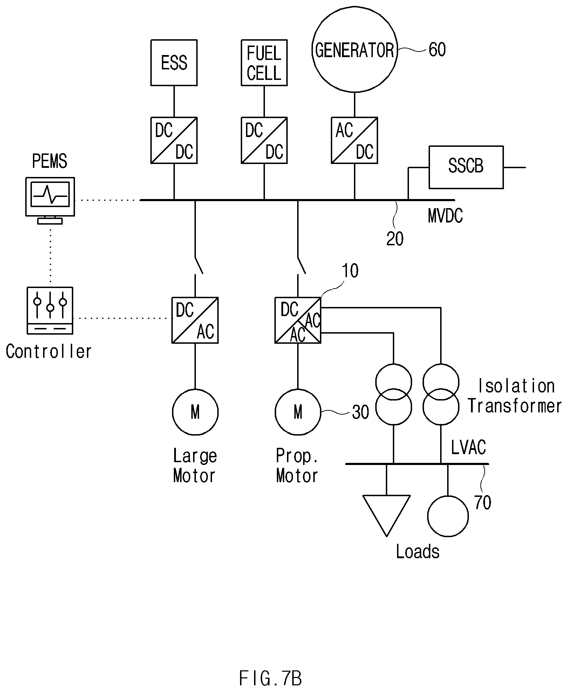

FIGS. 7A and 7B are schematic diagrams of a power system using the modular multilevel converter 10 having multiple output terminals, according to an embodiment disclosed in the specification. In this case, like the modular multilevel converter 100 illustrated in FIG. 4A, the modular multilevel converter 10 illustrated in FIGS. 7A to 7B may be a modular multilevel converter having multiple output terminals. Moreover, a first output terminal among the multiple output terminals may output medium-voltage AC power for driving the propulsion motor 30, and a second output terminal thereof may output low-voltage AC power.

For reference, the modular multilevel converter 10 having the multiple output terminals may be used between the MVDC distribution 20 and the propulsion motor 30 as shown in FIGS. 7A and 7B, whereas a general inverter/converter or a modular multilevel converter may be used between the MVDC distribution 20 and the other devices (e.g., an energy storage system, a large motor, and the like).

Referring to FIGS. 7A and 7B, a power system using the modular multilevel converter 10 having the multiple output terminals may include the MVDC distribution 20, a LVAC distribution (LVAC) 70, the modular multilevel converter 10, and the propulsion (Prop.) motor 30. In this case, the modular multilevel converter 10 may be placed between the MVDC distribution 20 and the propulsion motor 30.

Unlike the power system using the modular multilevel converter having a single output terminal as shown in FIGS. 5A and 5B, the modular multilevel converter 10 of the power system as shown in FIGS. 7A and 7B has multiple output terminals, and thus no separate inverter is additionally required to supply power to a service load or the LVAC distribution 70 corresponding thereto. Accordingly, the power system may be implemented smaller and simpler, and thus the number of required parts is reduced, thereby increasing productivity, and the ease of management and maintenance.

For example, at least part of the energy storage system ESS, the fuel cell system SOFC, the diesel generator DG and a shaft generator may be used as a power supply source for supplying power to the MVDC distribution 20.

For example, the energy storage systems ESS and the fuel cell systems SOFC may directly generate DC power for supplying the MVDC distribution 20. That is, a separate AC/DC conversion process may not be required.

For another example, the diesel generator DG and the shaft generator may indirectly generate DC power for supplying the MVDC distribution 20. That is, a separate process may be required to convert AC power generated by the diesel generator DG and the shaft generator into DC power.

Furthermore, to prevent accidents, the modular multilevel converter 10 having multiple output terminals and the service load 70 may be electrically connected through an isolation transformer. In this case, the isolation transformer may be either a two-winding transformer or a three-winding transformer.

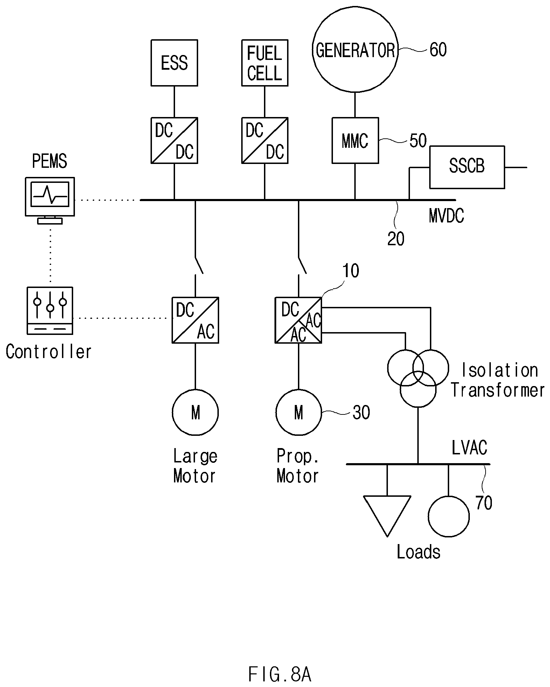

FIGS. 8A to 8C illustrate an embodiment in which the modular multilevel converter 50 having a single output terminal or multiple output terminals is additionally placed between the MVDC distribution 20 and the generator 60, in a power system in which the modular multilevel converter 10 having multiple output terminals as described through FIGS. 7A and 7B is placed between the MVDC distribution 20 and the propulsion motor 30.

For reference, the modular multilevel converter 10 having the multiple output terminals may be used between the MVDC distribution 20 and the propulsion motor 30 as shown in FIGS. 8A to 8C, whereas a general inverter/converter or a modular multilevel converter may be used between the MVDC distribution 20 and the other devices (e.g., an energy storage system, a large motor, and the like) other than the generator.

First, referring to FIG. 8A, it may be seen that the modular multilevel converter 50 having a single output terminal is additionally placed between the MVDC distribution 20 and the generator 60. As described above, the modular multilevel converter 50 includes multiple submodules. Accordingly, even when the modular multilevel converter 50 is connected to the large capacity of power (a generator), the capacity that each submodule needs to handle is reduced.

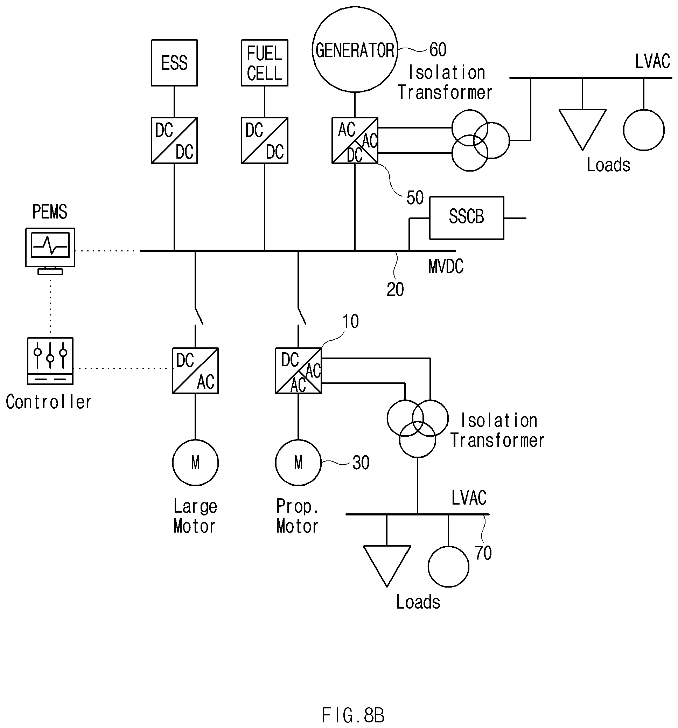

Moreover, referring to FIG. 8B, it may be seen that the modular multilevel converter 50 having multiple output terminals is additionally placed between the MVDC distribution 20 and the generator 60. In this case, it may be seen that a main output terminal (a medium-voltage DC power output) of the modular multilevel converter 50 with multiple output terminals transmits power to the MVDC distribution 20, and the auxiliary output terminal (a low-voltage AC power output) transmits power to the service load (LVAC). For example, the modular multilevel converter 50 having the multiple output terminals placed between the MVDC distribution 20 and the generator 60 illustrated in FIG. 8B may have a structure identical/similar to the structure illustrated in FIG. 4B.

In this case, to prevent accidents, the modular multilevel converter 50 having multiple output terminals and the service load (LVAC) may be electrically connected through an isolation transformer. In this case, the isolation transformer may be either a two-winding transformer or a three-winding transformer.

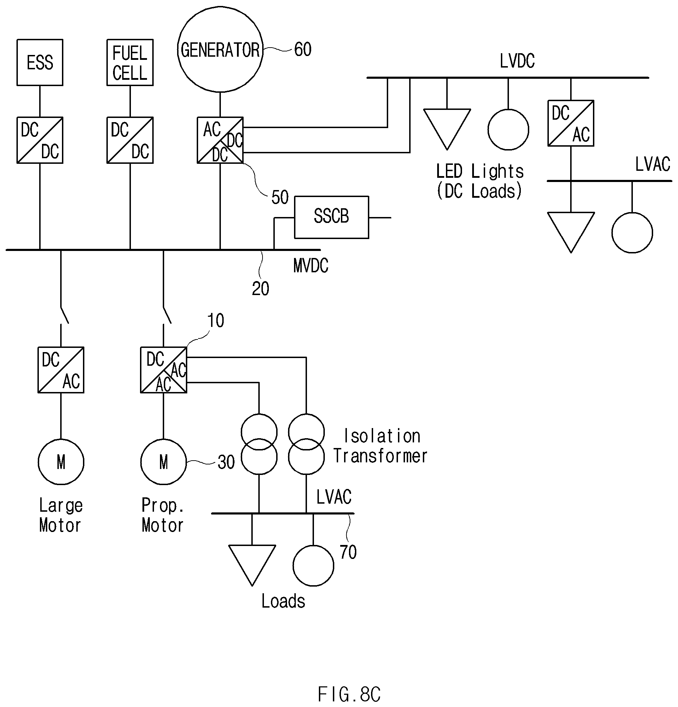

Moreover, referring to FIG. 8C, it may be seen that the modular multilevel converter 50 having multiple output terminals is additionally placed between the MVDC distribution 20 and the generator 60. In this case, it may be seen that a main output terminal (a medium-voltage DC power output) of the modular multilevel converter 50 with multiple output terminals transmits power to the MVDC distribution 20, and the auxiliary output terminal (a low-voltage DC power output) transmits power to the service load (LVDC). For example, power may be primarily delivered from the modular multilevel converter 50 having multiple output terminals placed between the MVDC distribution 20 and the generator 60 to the LVDC, and may be secondarily delivered from LVDC to LVAC through a DC/AC power conversion device.

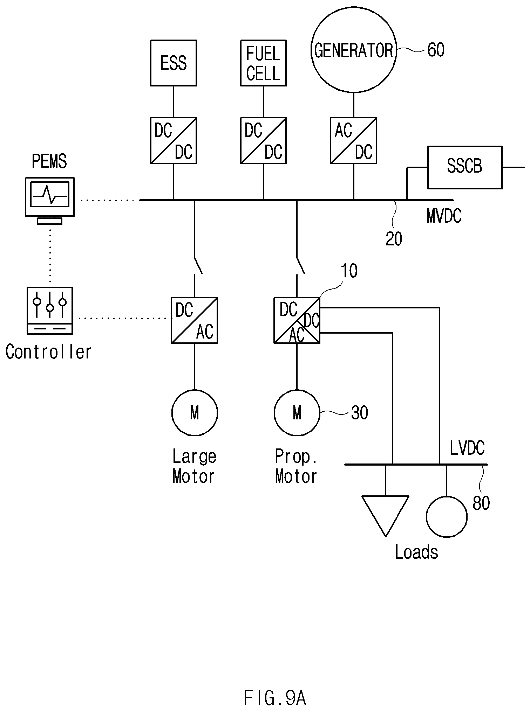

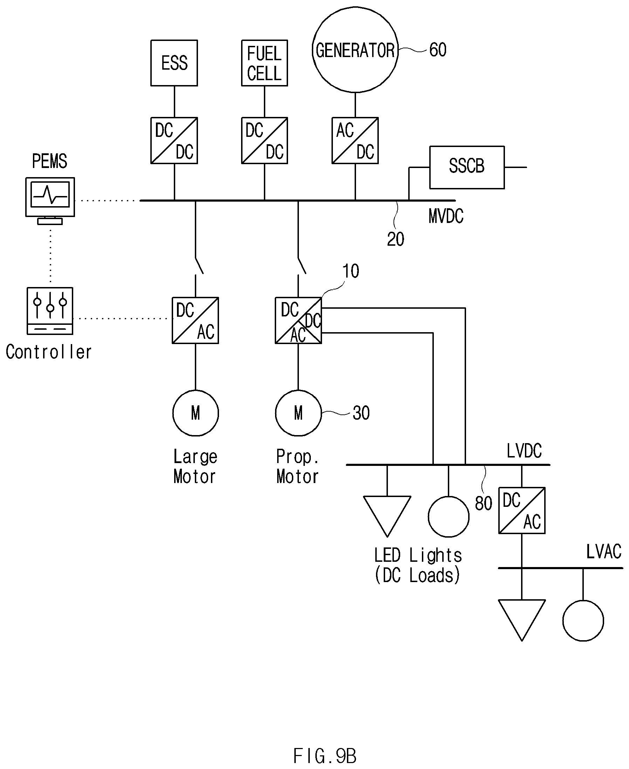

FIGS. 9A and 9B are schematic diagrams of a power system using the modular multilevel converter 10 having multiple output terminals, according to an embodiment disclosed in the specification.

For reference, a modular multilevel converter having multiple output terminals as shown in the aforementioned FIGS. 7A and 7B may output medium-voltage AC power for driving the propulsion motor 30 through a first output terminal, and may output low-voltage AC power LVAC through a second output terminal. On the other hand, the modular multilevel converter 10 having multiple output terminals as shown in FIGS. 9A to 9B may output medium-voltage AC power for driving the propulsion motor 30 through the first output terminal, and may output low-voltage DC power LVDC through the second output terminal. Accordingly, because the LVDC is capable of being provided to an onboard load (e.g., an LED lamp) without adding a separate power conversion device, the power system may be implemented smaller and simpler, and thus the number of required parts is reduced, thereby increasing productivity, and the ease of management and maintenance. The low-voltage AC power may mean AC power less than 1000 V, and the medium-voltage AC power may mean AC power greater than 1000 V and less than 35 kV.

For reference, the modular multilevel converter 10 having the multiple output terminals may be used between the MVDC distribution 20 and the propulsion motor 30 as shown in FIGS. 9A and 9B, whereas a general inverter/converter or a modular multilevel converter may be used between the MVDC distribution 20 and the other devices (e.g., an energy storage system, a large motor, and the like).

Referring to FIGS. 9A and 9B, a power system using the modular multilevel converter 10 having the multiple output terminals may include the MVDC distribution 20, a LVDC distribution (LVDC) 80, the modular multilevel converter 10, and the propulsion (Prop.) motor 30. In this case, the modular multilevel converter 10 may be placed between the MVDC distribution 20 and the propulsion motor 30.

Similarly to the power system as shown in FIGS. 7A and 7B, the modular multilevel converter 10 of the power system as shown in FIGS. 9A and 9B has multiple output terminals, and thus no separate inverter/converter is additionally required to supply power to a service load or the LVDC distribution 80 corresponding thereto.

For example, at least part of the energy storage system ESS, the fuel cell system SOFC, the diesel generator DG and a shaft generator may be used as a power supply source for supplying power to the MVDC distribution 20.

For example, the energy storage systems ESS and the fuel cell systems SOFC may directly generate DC power for supplying the MVDC distribution 20. That is, a separate AC/DC conversion process may not be required.

For another example, the diesel generator DG and the shaft generator may indirectly generate DC power for supplying the MVDC distribution 20. That is, a separate process may be required to convert AC power generated by the diesel generator DG and the shaft generator into DC power.

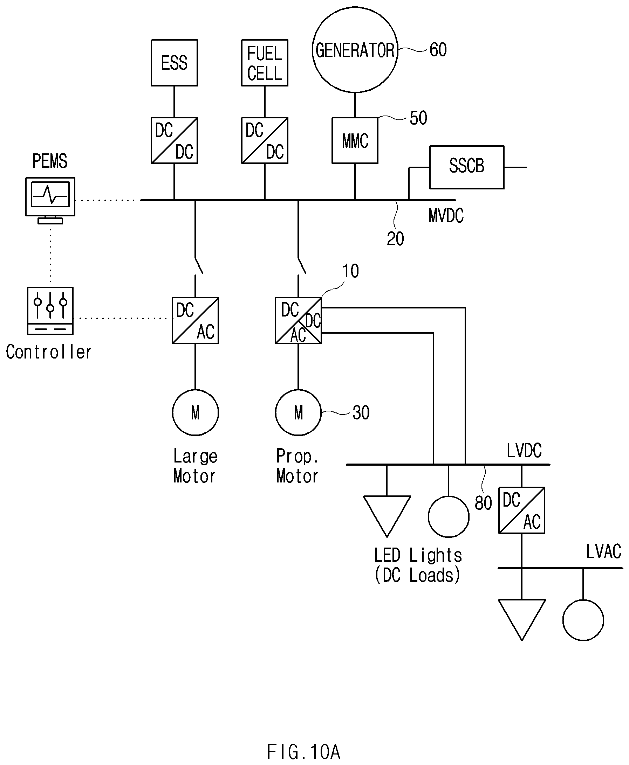

FIGS. 10A to 10C illustrate an embodiment in which the modular multilevel converter 50 having a single output terminal or multiple output terminals is additionally placed between the MVDC distribution 20 and the diesel generator DG, in a power system in which the modular multilevel converter 10 having multiple output terminals as described through FIGS. 9A and 9B is placed between the MVDC distribution 20 and the propulsion motor 30.

For reference, the modular multilevel converter 10 having the multiple output terminals may be used between the MVDC distribution 20 and the propulsion motor 30 shown in FIGS. 10A to 10C, whereas a general inverter/converter or a modular multilevel converter may be used between the MVDC distribution 20 and the other devices (e.g., an energy storage system, a large motor, and the like) other than the generator.

First, referring to FIG. 10A, it may be seen that the modular multilevel converter 50 having a single output terminal is additionally placed between the MVDC distribution 20 and the generator. As described above, the modular multilevel converter 50 includes multiple submodules. Accordingly, even when the modular multilevel converter 50 is connected to the large capacity of power (a generator), the capacity that each submodule needs to handle is reduced.

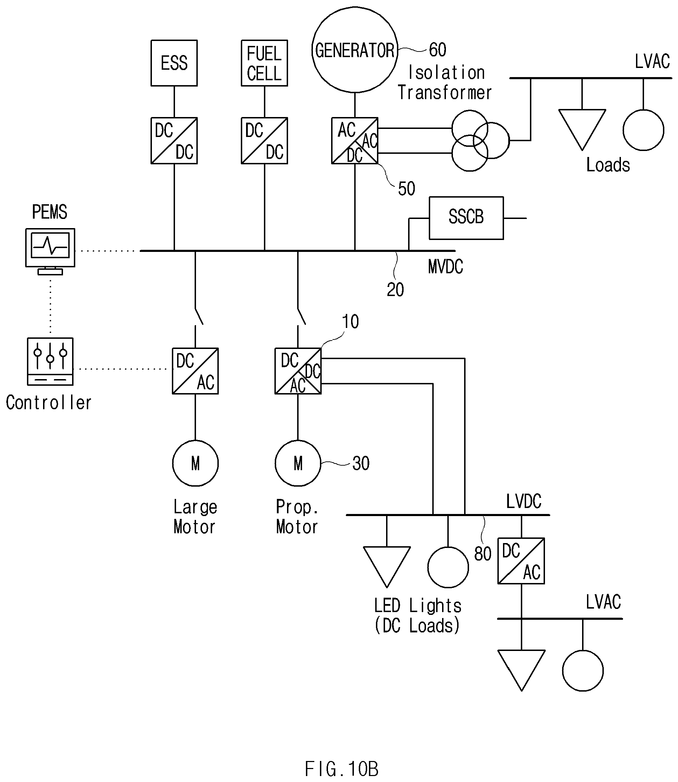

Moreover, referring to FIG. 10B, it may be seen that the modular multilevel converter 50 having multiple output terminals is additionally placed between the MVDC distribution 20 and the generator. In this case, it may be seen that a main output terminal (a medium-voltage DC power output) of the modular multilevel converter 50 with multiple output terminals transmits power to the MVDC distribution 20, and the auxiliary output terminal (a low-voltage AC power output) transmits power to the service load (LVAC). For example, the modular multilevel converter 50 having the multiple output terminals placed between the MVDC distribution 20 and the generator illustrated in FIG. 10B may have a structure identical/similar to the structure illustrated in FIG. 4B.

In this case, to prevent accidents, the modular multilevel converter 50 having multiple output terminals and the service load (LVAC) may be electrically connected through an isolation transformer. In this case, the isolation transformer may be either a two-winding transformer or a three-winding transformer.

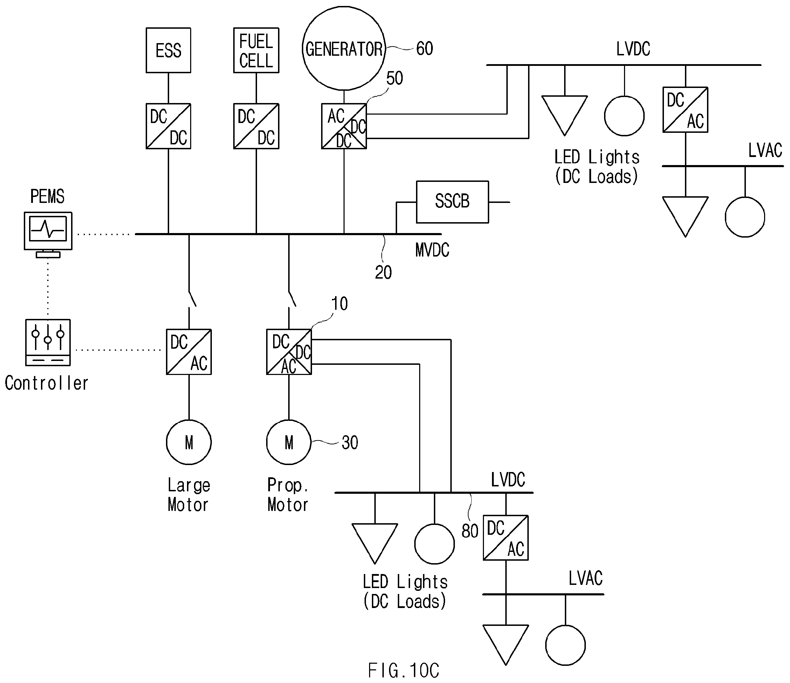

Moreover, referring to FIG. 10C, it may be seen that the modular multilevel converter 50 having multiple output terminals is additionally placed between the MVDC distribution 20 and the generator. In this case, it may be seen that a main output terminal (a medium-voltage DC power output) of the modular multilevel converter 50 with multiple output terminals transmits power to the MVDC distribution 20, and the auxiliary output terminal (a low-voltage DC power output) transmits power to the service load (LVDC). For example, power may be primarily delivered from the modular multilevel converter 50 having multiple output terminals placed between the MVDC distribution 20 and the generator to the LVDC, and may be secondarily delivered from LVDC to LVAC through a DC/AC power conversion device.

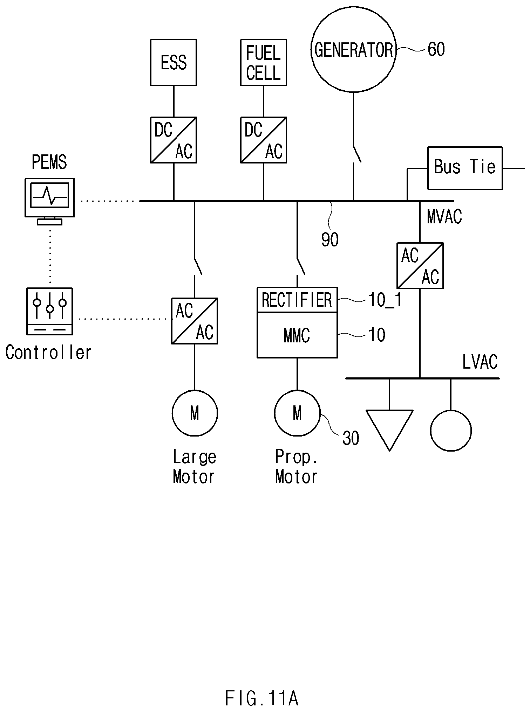

FIG. 11A is a schematic diagram of a power system including the modular multilevel converter 10 having a single output terminal and a medium-voltage alternating current (MVAC) distribution 90, according to an embodiment disclosed in the specification.

For reference, as described with reference FIG. 1, because the modular multilevel converter 10 having a single output terminal as shown in FIG. 11A receives medium-voltage DC power MVDC as an input and outputs medium-voltage AC power for driving a load (e.g., the propulsion motor 30), when a power system includes the MVAC distribution 90 instead of the MVDC distribution, after a rectifier 10_1 is additionally placed at a front end of the modular multilevel converter 10 having a single output terminal, the rectifier 10_1 may convert AC power into DC power and may deliver the DC power to the modular multilevel converter.

For reference, the rectifier 10_1 and the modular multilevel converter 10 having a single output terminal may be used between the MVAC distribution 90 and the propulsion motor 30 shown in FIG. 11A. On the other hand, a general inverter/converter or a modular multilevel converter may be used between the MVAC distribution 90 and the other devices (e.g., the energy storage system ESS, the fuel cell system SOFC, a large motor, and the like).

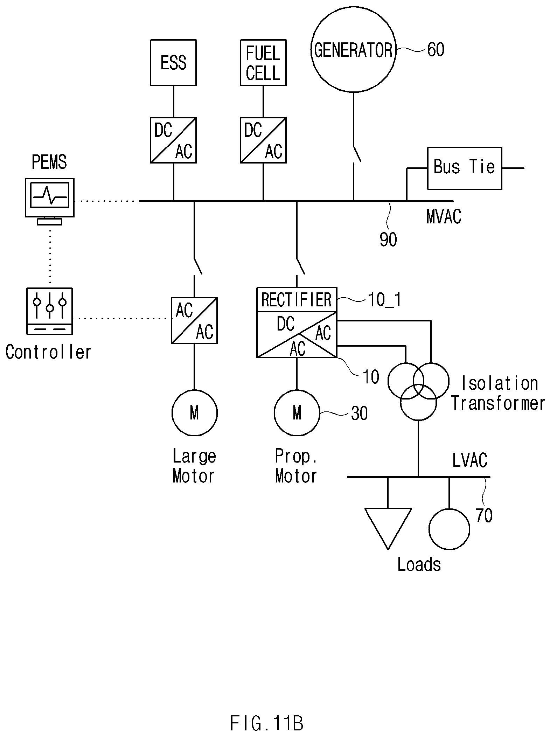

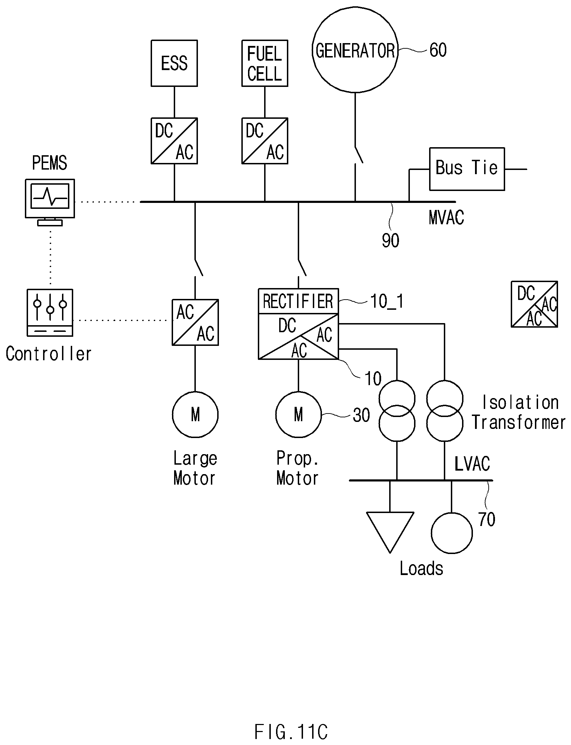

FIGS. 11B and 11C are schematic diagrams of a power system including the modular multilevel converter 10 having multiple output terminals and the MVAC distribution 90, according to an embodiment disclosed in the specification.

For reference, a power system illustrated in FIGS. 11B and 11C is generally similar to the power system illustrated in FIG. 11A, except that it includes a modular multilevel converter with multiple output terminals, not a modular multilevel converter with a single output terminal. In other words, in that an auxiliary output terminal for outputting low-voltage AC power is additionally included, low-voltage AC power corresponding to a low-voltage load requiring low-voltage AC power may be supplied without the power conversion device of the power system shown in FIG. 11A.

For reference, the rectifier 10_1 and the modular multilevel converter 10 having multiple output terminals may be used between the MVAC distribution 90 and the propulsion motor 30 shown in FIGS. 11B and 11C. On the other hand, a general inverter/converter or a modular multilevel converter may be used between the MVAC distribution 90 and the other devices (e.g., an energy storage system, a large motor, and the like).

As in the above description given in FIG. 11A, the modular multilevel converter 10 having multiple output terminals in the power system illustrated in FIGS. 11B and 11C receives the medium-voltage DC power MVDC as an input and outputs medium-voltage AC power for driving the propulsion motor 30, and thus the rectifier 10_1 may be additionally placed at the front end of the modular multilevel converter 10 having multiple output terminals when the power system includes the MVAC distribution 90.

In this case, to prevent accidents, the modular multilevel converter 10 having multiple output terminals and the service load 70 may be electrically connected through an isolation transformer. In this case, the isolation transformer may be either a two-winding transformer or a three-winding transformer.

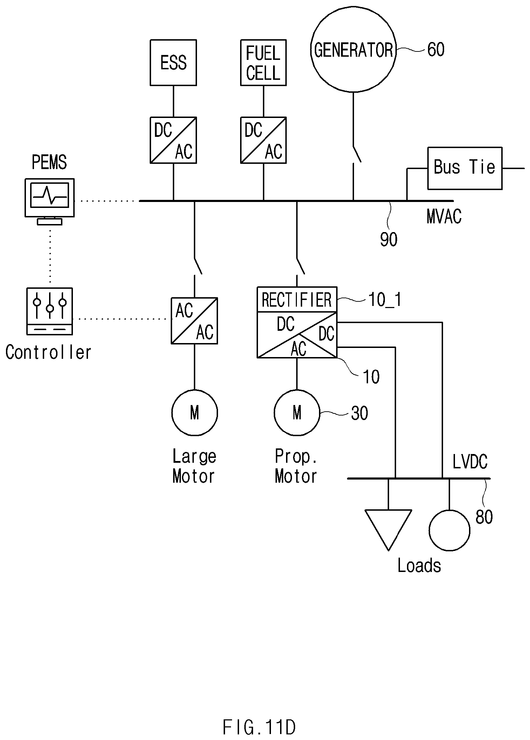

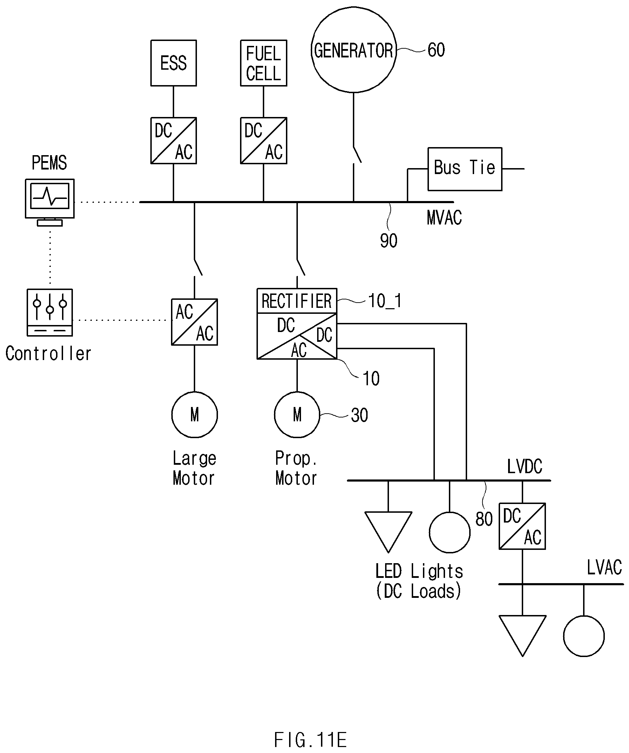

FIGS. 11D and 11E are schematic diagrams of a power system including the modular multilevel converter 10 having multiple output terminals and a MVAC distribution, according to an embodiment disclosed in the specification.

For reference, a power system illustrated in FIGS. 11D and 11E is generally similar to the power system illustrated in FIG. 11A, but differs in that it includes a modular multilevel converter with multiple output terminals, not a modular multilevel converter with a single output terminal. In other words, in that an auxiliary output terminal for outputting low-voltage DC power is additionally included, the low-voltage DC power corresponding to a low-voltage load requiring the low-voltage DC power may be supplied without the power conversion device 91 of the power system shown in FIG. 11A. Furthermore, the power system shown in FIGS. 11D and 11E is generally similar to the power system shown in FIGS. 11B and 11C, except that the auxiliary output terminal outputs DC power, not AC power.

For reference, the rectifier 10_1 and the modular multilevel converter 10 having multiple output terminals may be used between the MVAC distribution 90 and the propulsion motor 30 shown in FIGS. 11D and 11E. On the other hand, a general inverter/converter or a modular multilevel converter may be used between the MVAC distribution 90 and the other devices (e.g., an energy storage system, a large motor, and the like).

As in the above description given in FIG. 11A, the modular multilevel converter 10 having multiple output terminals in the power system illustrated in FIGS. 11D and 11E receives medium-voltage DC power MVDC as an input and outputs medium-voltage AC power for driving the propulsion motor 30, and thus the rectifier 10_1 may be additionally placed at the front end of the modular multilevel converter 10 having multiple output terminals when the power system includes the MVAC distribution 90.

Besides, as illustrated in FIG. 11D, low-voltage DC power may be delivered to a LVDC distribution. However, as shown in FIG. 11E, power may be primarily delivered to the LVDC distribution, and power may be secondarily delivered from the LVDC distribution to a LVAC distribution through an inverter.

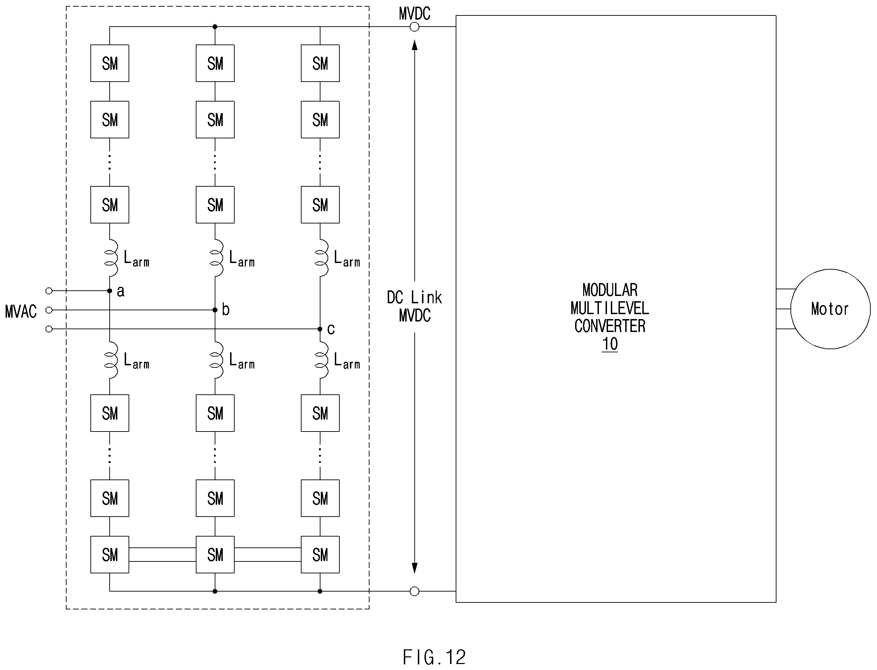

In the meantime, the rectifier 10_1 illustrated in FIGS. 11A to 11E may have a structure identical/similar to a modular multilevel converter having a single output terminal, and this will be described with reference to FIG. 12.

FIG. 12 is a schematic diagram illustrating the modular multilevel converter 10 and the rectifier 10_1 arranged at a front end thereof.

Referring to FIG. 12, it may be seen that the rectifier 10_1 has a structure identical/similar to the modular multilevel converter having a single output terminal described through FIG. 1. In other words, it may be seen that the rectifier receives medium-voltage AC power from a MVAC distribution through an input terminal and converts and outputs the medium-voltage AC power into medium-voltage DC power MVDC, and the modular multilevel converter 10 receives the medium-voltage DC power MVDC from the rectifier 10_1 through the input terminal, converts the medium-voltage DC power MVDC into AC power, and outputs the AC power to a load (e.g., motor).

For reference, FIG. 12 illustrates a propulsion motor as an example of a load for convenience, but the load of a power system according to an embodiment disclosed in the specification is not limited to the propulsion motor.

Moreover, the modular multilevel converter 10 illustrated in FIG. 12 may be a modular multilevel converter having a single output terminal as illustrated in FIG. 11A, but is not limited thereto, and may be a modular multilevel converter having multiple output terminals as in FIGS. 11B and 11C.

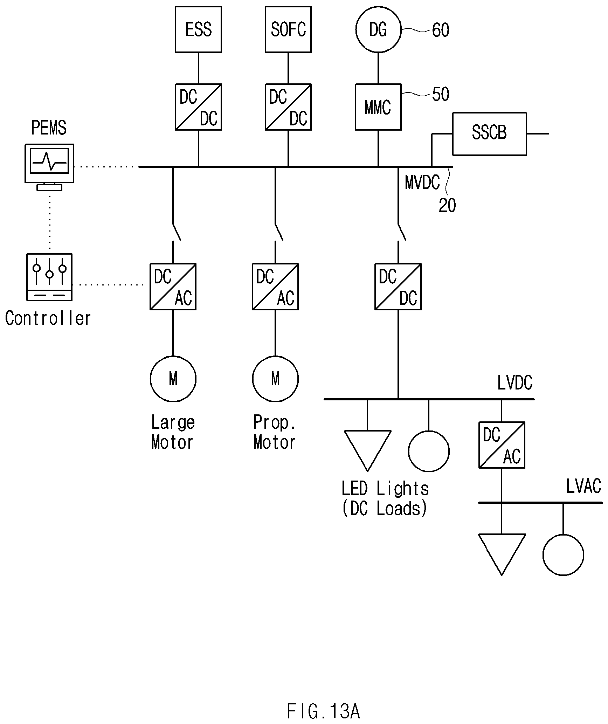

FIGS. 13A to 13C are schematic diagrams of a power system in which the modular multilevel converter 50 according to an embodiment disclosed in the specification is positioned between the MVDC distribution 20 and the generator 60.

For example, referring to FIG. 13A, a power system may include the MVDC distribution 20, the modular multilevel converter 50 having a single output terminal, and the generator 60. In this case, the modular multilevel converter 50 having a single output terminal may be placed between the MVDC distribution 20 and the generator 60.

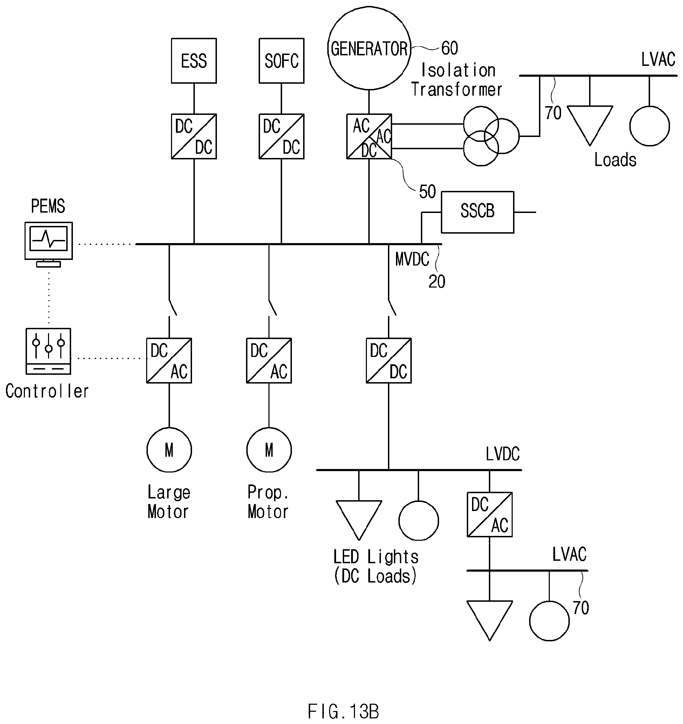

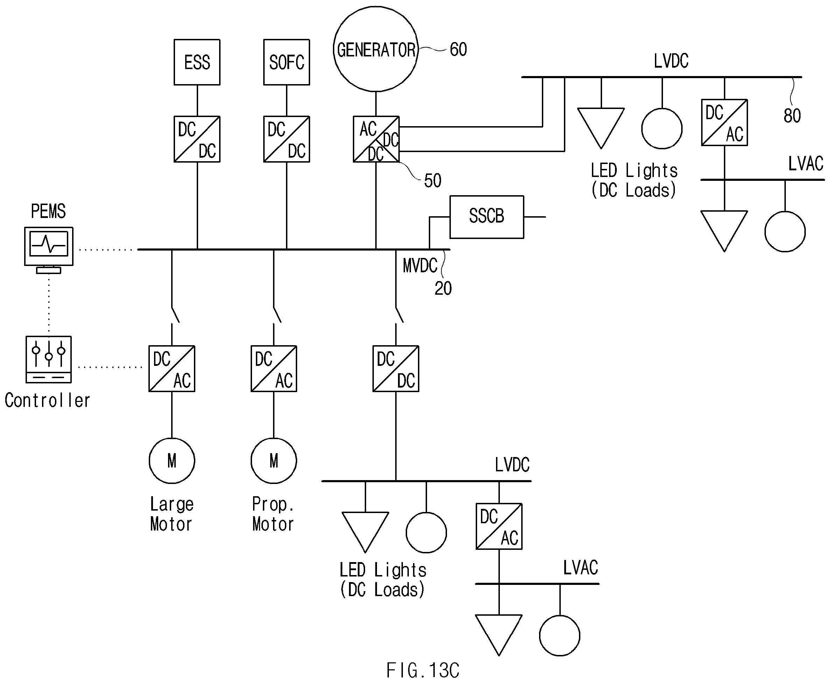

For another example, referring to FIGS. 13B and 13C, the power system may include the MVDC distribution 20, the modular multilevel converter 50 having multiple output terminals, and the generator 60. In this case, the modular multilevel converter 50 having multiple output terminals may be placed between the MVDC distribution 20 and the generator 60.

Unlike the power system using the modular multilevel converter having a single output terminal as shown in FIG. 13A, the modular multilevel converter 50 of the power system as shown in FIGS. 13B and 13C has multiple output terminals, and thus no separate inverter is additionally required to supply power to a service load. In this way, the limited space on the ship may be effectively used and maintenance may be easy.

For reference, the modular multilevel converter 50 placed between the MVDC distribution 20 and the generator 60 in FIG. 13B receives AC power from the generator 60 to output DC power to the MVDC distribution 20, and outputs low-voltage AC power LVAC to the LVAC distribution 70 for supplying AC power to a service load. On the other hand, the modular multilevel converter 50 placed between the MVDC distribution 20 and the generator 60 of FIG. 13C receives AC power from the generator 60 to output DC power to the MVDC distribution 20, and outputs low-voltage DC power LVDC to the LVDC distribution 80 for supplying AC power to the service load.

A conventional breaker for the MVDC distribution is expensive; the size of the conventional breaker is large; and, there are few commercial products for the conventional breaker. However, as shown in FIGS. 13A to 13C, when the modular multilevel converter 50 is placed between the MVDC distribution 20 and the generator 60, a power system without a circuit breaker may be implemented, thereby overcoming the issues.

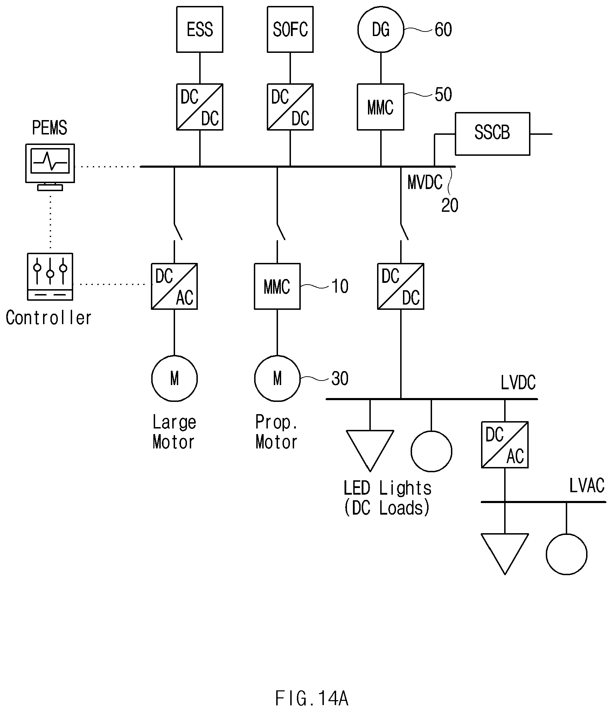

FIGS. 14A to 14J illustrate an embodiment in which the modular multilevel converter 10 having a single output terminal or multiple output terminals is additionally placed between the MVDC distribution 20 and the propulsion motor 30, in a power system in which the modular multilevel converter 50 is placed between the MVDC distribution 20 and the generator 60 described through FIGS. 13A and 13C.

First of all, referring to FIG. 14A, it may be seen that the modular multilevel converter 10 having a single output terminal is additionally placed between the MVDC distribution 20 and the propulsion motor 30 in a power system in which the modular multilevel converter 50 having a single output terminal is placed between the MVDC distribution 20 and the generator 60.

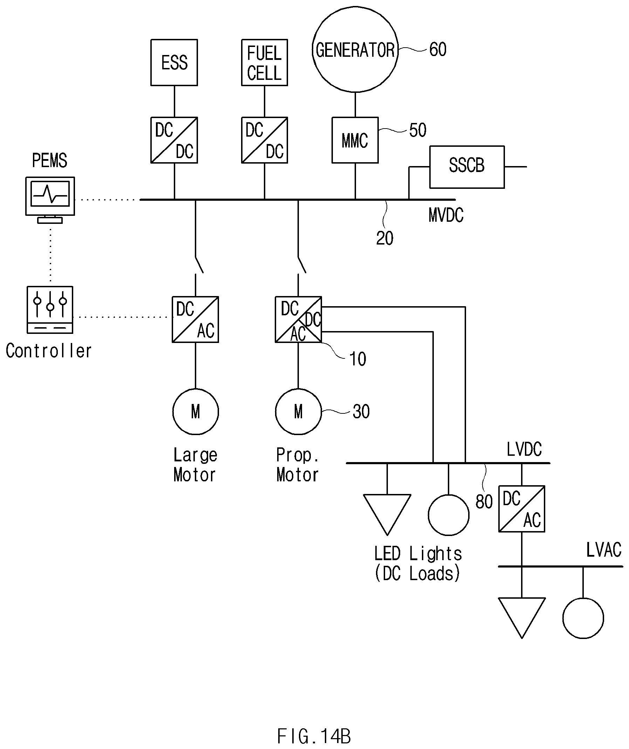

Moreover, referring to FIG. 14B, it may be seen that the modular multilevel converter 10 having multiple output terminals is additionally placed between the MVDC distribution 20 and the propulsion motor 30 in a power system in which the modular multilevel converter 50 having a single output terminal is placed between the MVDC distribution 20 and the generator 60. For reference, FIG. 14B illustrates, but is not limited to, a modular multilevel converter 10 having multiple output terminals that delivers low-voltage DC power to the LVDC distribution 80 through an auxiliary output terminal (e.g., a second output terminal). For example, the modular multilevel converter 10 with multiple output terminals may also deliver low-voltage AC power to an LVAC distribution via the auxiliary output terminal (e.g., the second output terminal).

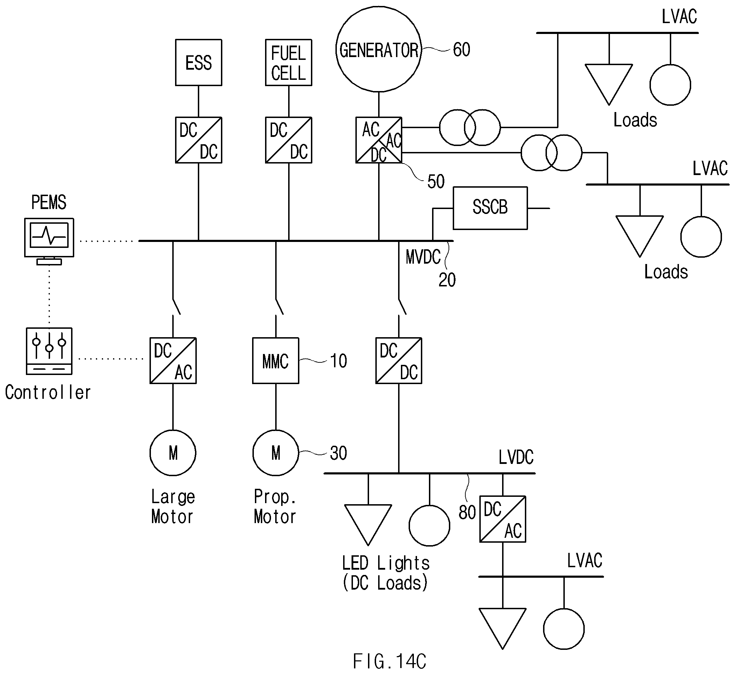

Furthermore, referring to FIGS. 14C to 14E, it may be seen that the modular multilevel converter 10 having a single output terminal or multiple output terminals is additionally placed between the MVDC distribution 20 and the propulsion motor 30 in a power system in which the modular multilevel converter 50 having multiple output terminals is placed between the MVDC distribution 20 and the generator 60.

For reference, in FIG. 14C, it may be seen that the modular multilevel converter 10 having a single output terminal is additionally placed between the MVDC distribution 20 and the propulsion motor 30, and thus a separate power conversion device 40 is additionally required to supply power to a service load.

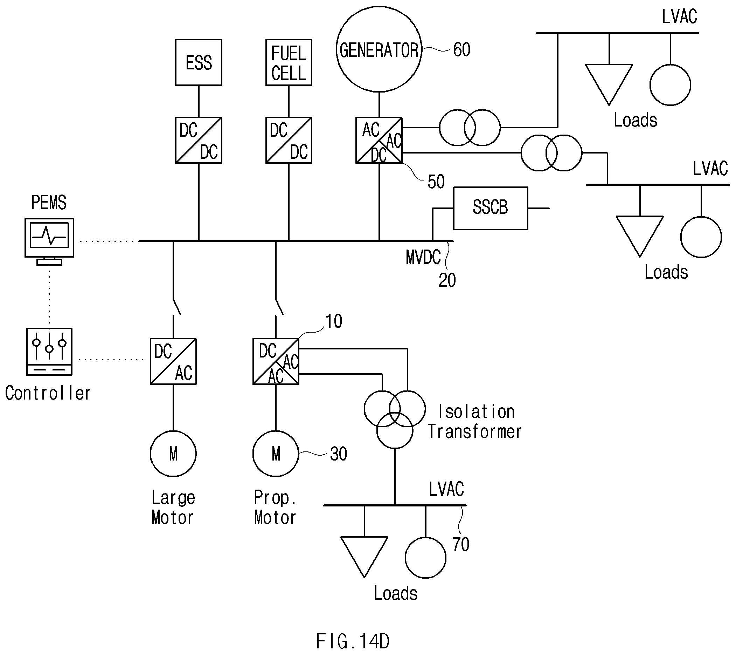

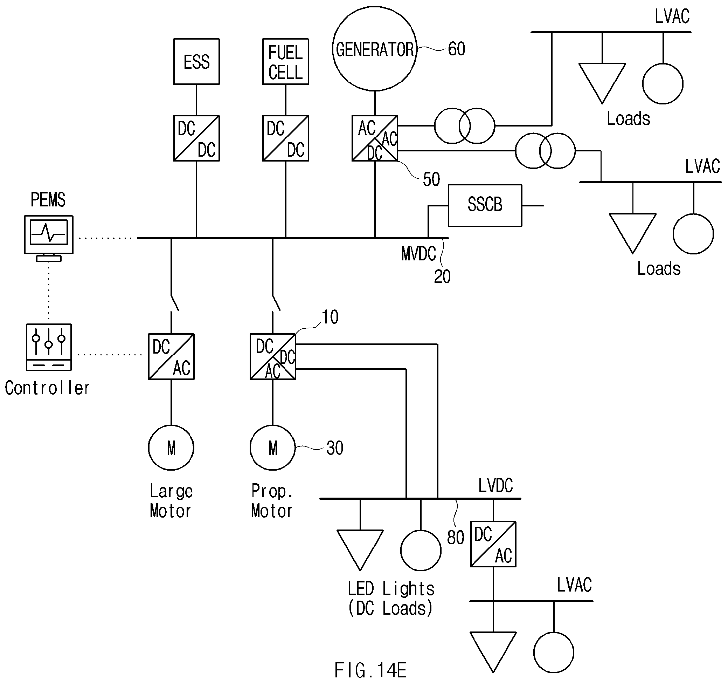

On the other hand, it may be seen that the modular multilevel converter 10 additionally placed between the MVDC distribution 20 and the propulsion motor 30, as shown in FIG. 14D and FIG. 14E, has multiple output terminals, and thus no separate power conversion device is additionally required to supply power to the service load.

For reference, FIG. 14D illustrates that the modular multilevel converter 10 having multiple output terminals delivers low-voltage AC power to the LVAC distribution 70 through an auxiliary output terminal (e.g., a second output terminal). On the other hand, FIG. 14E illustrates that the modular multilevel converter 10 having multiple output terminals delivers low-voltage DC power to the LVDC distribution 80 through an auxiliary output terminal (e.g., a second output terminal).

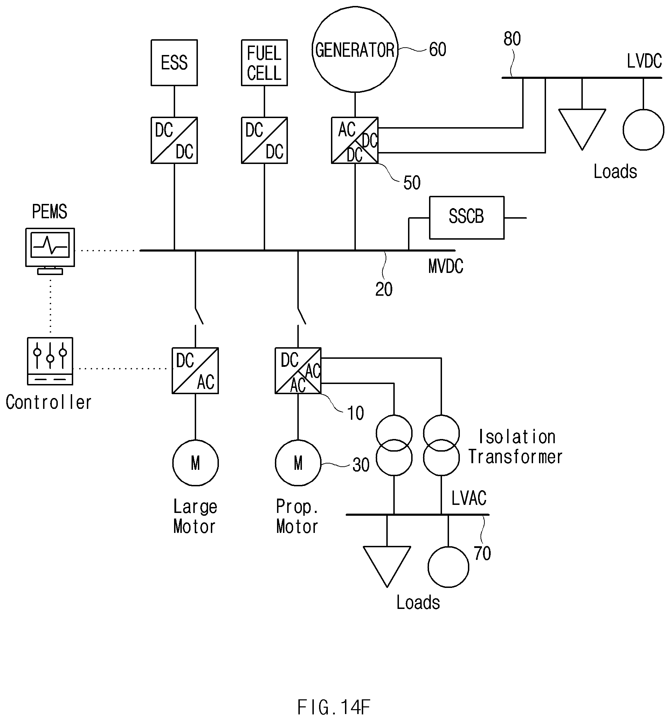

Furthermore, referring to FIGS. 14F to 14J, it may be seen that the modular multilevel converter 10 having a single output terminal or multiple output terminals is additionally placed between the MVDC distribution 20 and the propulsion motor 30 in a power system in which the modular multilevel converter 50 having multiple output terminals is placed between the MVDC distribution 20 and the generator 60.

For reference, it may be seen that in the power system illustrated in FIGS. 14C to 14E, the modular multilevel converter 50 having multiple output terminals placed between the MVDC distribution 20 and the generator 60 receives medium-voltage AC power from the generator and outputs medium-voltage DC power and low-voltage AC power. On the other hand, it may be seen that in the power system illustrated in FIGS. 14F to 14J, the modular multilevel converter 50 having multiple output terminals placed between the MVDC distribution 20 and the generator 60 receives medium-voltage AC power from a generator and outputs medium-voltage DC power and low-voltage DC power.

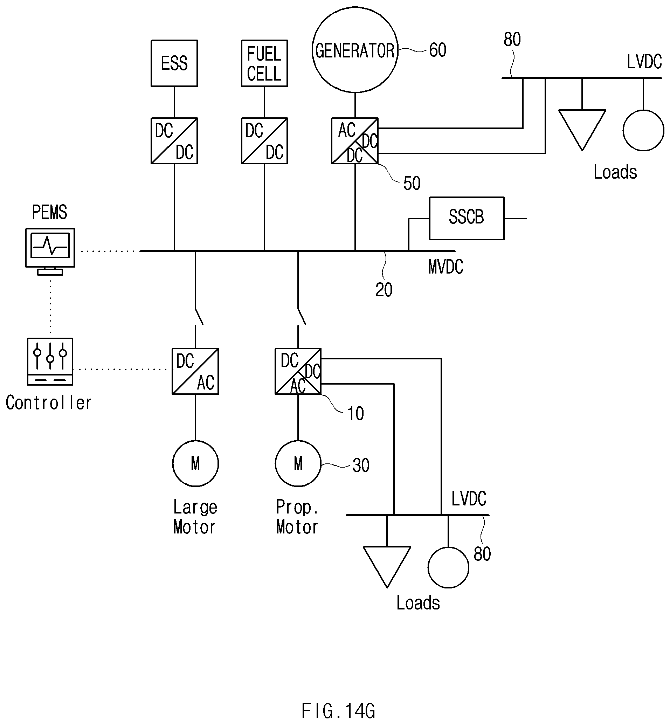

First of all, referring to FIGS. 14F to 14G, it may be seen that the modular multilevel converter 10 having multiple output terminals is additionally placed between the MVDC distribution 20 and the propulsion motor 30 in a power system in which the modular multilevel converter 50 having multiple output terminals is placed between the MVDC distribution 20 and the generator 60. For reference, FIG. 14F illustrates that the modular multilevel converter 10 thus additionally placed delivers low-voltage AC power to the LVAC distribution 70 through an auxiliary output terminal (e.g., a second output terminal). On the other hand, FIG. 14G illustrates that the modular multilevel converter 10 thus additionally placed delivers low-voltage DC power to the LVDC distribution 80 through an auxiliary output terminal (e.g., a second output terminal).

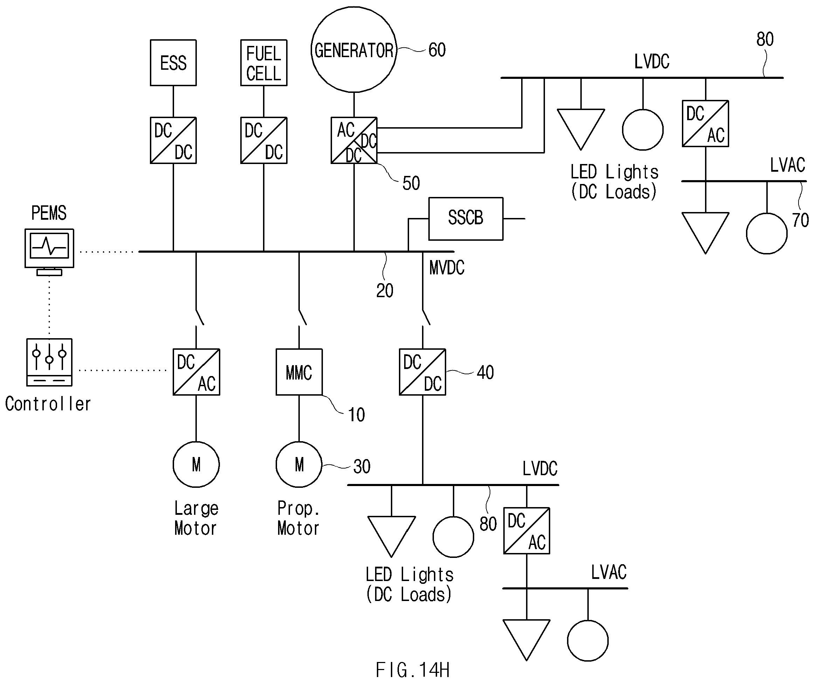

Besides, the power system illustrated in FIG. 14H is the same as the power system illustrated in FIG. 14F in that power is converted and delivered from the modular multilevel converter 50, which is located between the MVDC distribution 20 and the generator 60, to the LVDC distribution 80. However, the power system illustrated in FIG. 14H is different from the power system illustrated in FIG. 14F in that power is additionally delivered from the LVDC distribution 80 to the LVAC distribution 70 through a separate inverter in the power system illustrated in FIG. 14H. Moreover, the power system illustrated in FIG. 14F is different from the power system illustrated in FIG. 14H in that the modular multilevel converter 10 having multiple output terminals is additionally placed between the MVDC distribution 20 and the propulsion motor 30 in the power system illustrated in FIG. 14F, but the modular multilevel converter 10 having a single output terminal is additionally placed between the MVDC distribution 20 and the propulsion motor 30 in the power system illustrated in FIG. 14H.

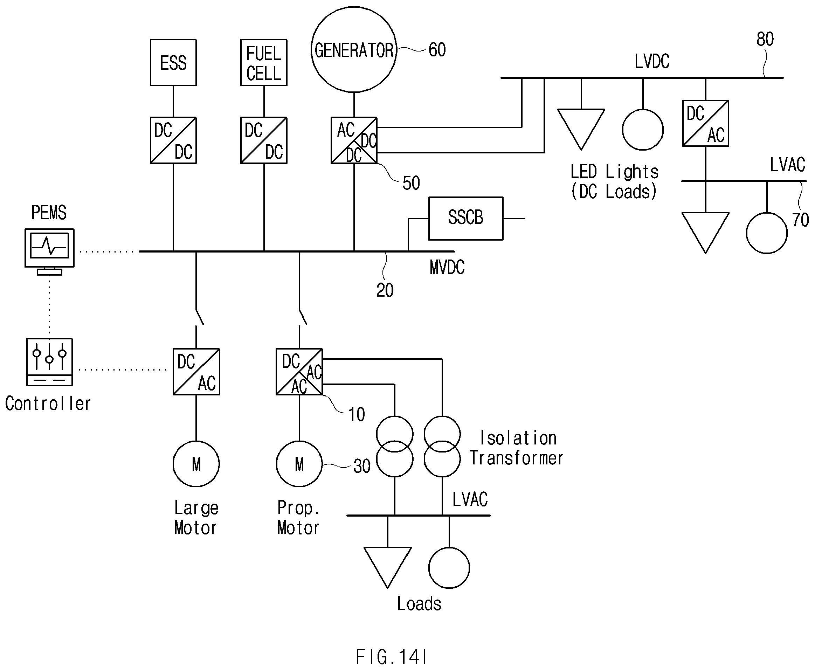

Furthermore, the power system illustrated in FIG. 14I is the same as the power system illustrated in FIG. 14F in that power is converted and delivered from the modular multilevel converter 50, which is located between the MVDC distribution 20 and the generator 60, to the LVDC distribution 80. However, the power system illustrated in FIG. 14I is different from the power system illustrated in FIG. 14F in that power is additionally delivered from the LVDC distribution 80 to the LVAC distribution 70 through a separate inverter in the power system illustrated in FIG. 14I.

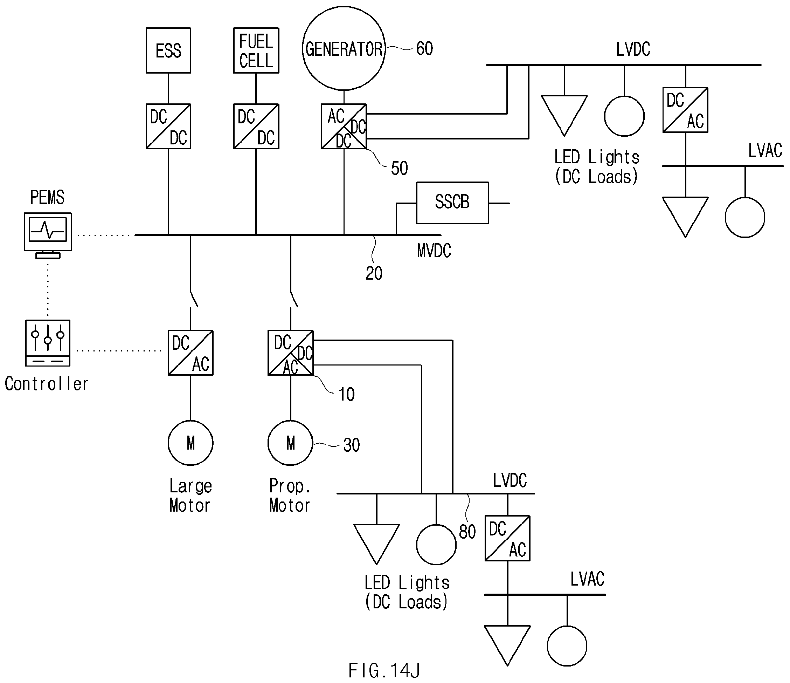

Besides, the power system illustrated in FIG. 14J is different from the power system illustrated in FIG. 14I in that power is additionally delivered from the LVDC distribution 80 to the LVAC distribution 70 through a separate inverter in the power system illustrated in FIG. 14J.

Also, the propulsion motor 30 requires a large amount of power. In this case, when the modular multilevel converter 10 is additionally placed between the MVDC distribution 20 and the propulsion motor 30 according to an embodiment disclosed in the specification, the propulsion motor 30 may be stably supplied with power.

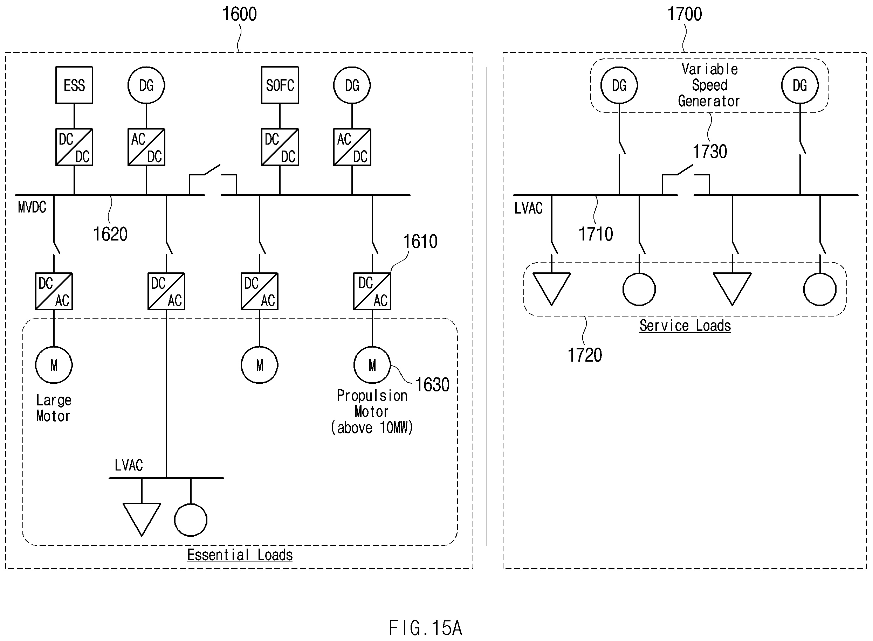

In the meantime, FIGS. 15A to 15D schematically illustrate a power system, in which grids of essential loads and service loads are separated from each other, according to an embodiment disclosed in the specification.

For reference, an essential load refers to a load that is essential for operating a ship, and a service load refers to a load capable of being changed depending on situations. The essential load may constantly supply power, and the service load may variably supply power.

Conventionally, the essential load and the service load are included in the same grid, thereby making it difficult to control the service load.

On the other hand, as illustrated in FIGS. 15A to 15D, when a grid 1600 of the essential load and a grid 1700 of the service load are separated from each other, the service load may be easily controlled, thereby efficiently managing power.

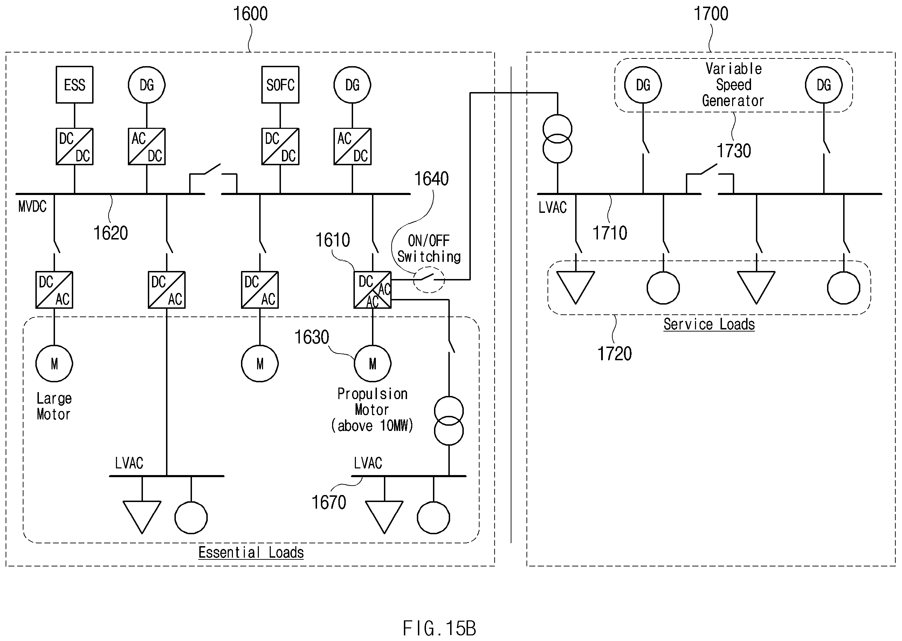

First of all, referring to FIGS. 15A and 15B, it may be seen that the first grid 1600 corresponding to the essential load and the second grid 1700 corresponding to the service load are electrically separated from each other.

In this case, the first grid 1600 may include a MVDC distribution 1620, a propulsion motor 1630, and a modular multilevel converter 1610. Furthermore, a power supply source that supplies power may be additionally included in the first grid 1600. For example, at least part of an energy storage system (ESS), a fuel cell system (SOFC), a diesel generator (DG), and a shaft generator (a large motor) may be additionally included. In this case, a power conversion device may be used to transfer power supplied from a power supply source to the MVDC distribution 1620. In this case, a general inverter, a general converter, or the like may be used as the power conversion device, but is not limited thereto. A modular multilevel converter having a single output terminal or multiple output terminals may be used. Moreover, the modular multilevel converter 1610 of the first grid 1600 may be a modular multilevel converter having a single output terminal as illustrated in FIG. 15B, but is not limited thereto, and may be a modular multilevel converter having multiple output terminals as in FIG. 15A. When the modular multilevel converter 1610 has multiple output terminals as illustrated in FIG. 15A, power may be simultaneously delivered to the propulsion motor 30 as well as a lower load 1670.

Moreover, the second grid 1700 may include a LVAC distribution 1710, a service load 1720, and a variable speed generator 1730.

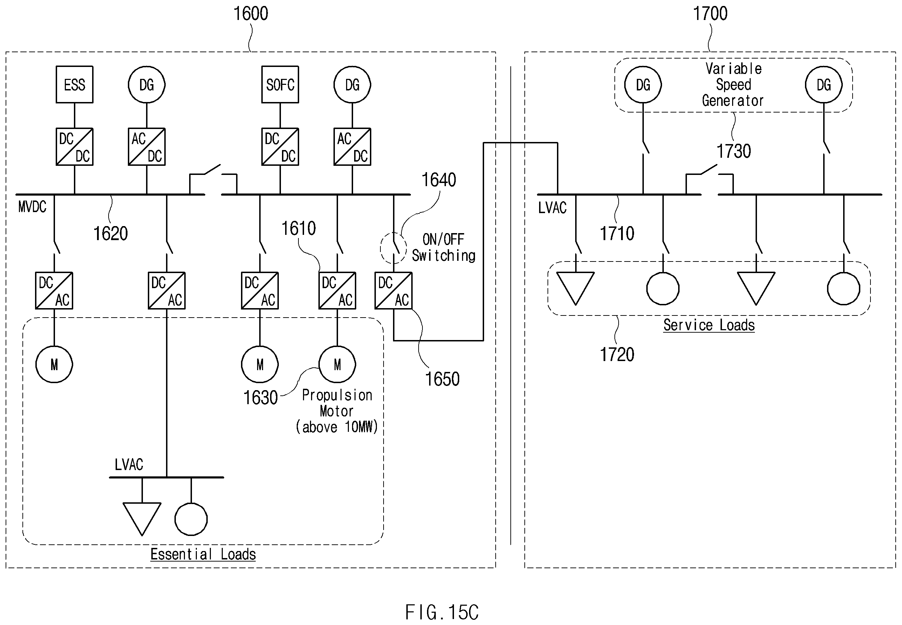

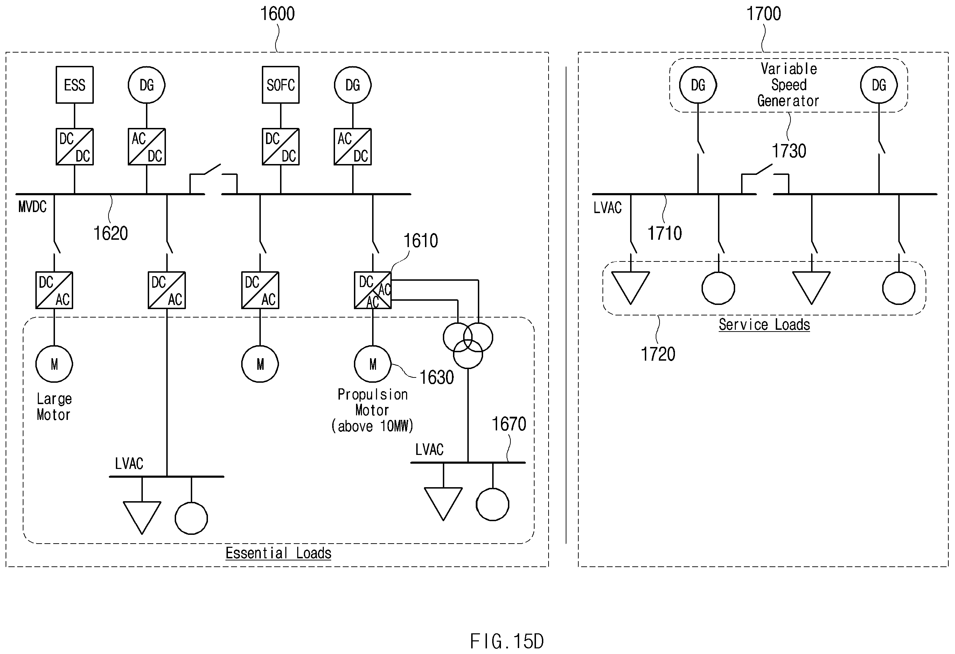

In the meantime, when the variable speed generator 1730 included in the second grid 1700 has a problem, power may not be supplied to the service load 1720. Accordingly, the first grid 1600 and the second grid 1700 may be electrically isolated, as shown in FIGS. 15A and 15B. In some cases, power from the first grid 1600 may be auxiliarily delivered to the second grid 1700 through a switching operation, as shown in FIGS. 15C and 15D.

For example, as illustrated in FIG. 15C, a switch 1640 is placed between the second grid 1700 and an auxiliary output terminal (a second output terminal) of the modular multilevel converter 1610 having multiple output terminals of the first grid 1600, thereby sharing the power of the first grid 1600 with the second grid 1700 in an emergency. Compared with the power system of FIG. 15A, it may be seen that the switch 1640 is added to the side of an auxiliary output terminal of the modular multilevel converter 1610 having multiple output terminals of the first grid 1600 of FIG. 15C. For reference, in FIG. 15C, the modular multilevel converter 1610 of the first grid 1600 is illustrated as delivering low-voltage AC power to the second grid 1700, but is not limited thereto. For example, the modular multilevel converter 1610 of the first grid may deliver low-voltage DC power to the second grid.

For another example, as shown in FIG. 15D, the switch 1640 is placed between a modular multilevel converter 1650 having a single output terminal of the first grid 1600 and the MVDC distribution 1620, thereby sharing the power of the first grid 1600 with the second grid 1700 in an emergency. Compared with the power system of FIG. 15B, it may be seen that the switch 1640 is additionally connected to the MVDC distribution 1620 of the first grid 1600 of FIG. 15D, and the modular multilevel converter 1650 having a single output terminal is additionally placed between the corresponding switch 1640 and the second grid 1700.

The above description is merely an example of the technical idea of the present disclosure, and various modifications and variations may be made by one skilled in the art without departing from the essential characteristic of the present disclosure.

Accordingly, embodiments of the present disclosure are intended not to limit but to explain the technical idea of the present disclosure, and the scope and spirit of the present disclosure is not limited by the above embodiments. The scope of protection of the present disclosure should be construed by the attached claims, and all equivalents thereof should be construed as being included within the scope of the present disclosure.

## Claims

1. A modular multilevel converter comprising:
a first converter device having a leg according to a preset phase, wherein the leg has an upper arm and a lower arm, and each of the upper arm and the lower arm includes a plurality of submodules connected in series so as to convert direct current (DC) power, which is input to an input terminal, into alternating current (AC) power having the phase and to output the AC power through a first output terminal; and
a second converter device configured to convert the DC power, which is input to the input terminal, into AC power having a voltage level lower than a voltage level of the AC power output from the first converter device and to output the AC power through a second output terminal.

2. The modular multilevel converter of claim 1, wherein the second converter device includes at least one of:
a first low-voltage converter device composed of a plurality of additional submodules connected in series with the upper arm of the leg of the first converter device in a full-bridge method, wherein a plurality of additional submodules adjacent to each other are connected in parallel with each other, and the plurality of additional submodules converts DC power of the input terminal into AC power having a voltage level lower than a voltage level of the AC power output from the first converter device; or
a second low-voltage converter device composed of a plurality of additional submodules connected in series with the lower arm of the leg of the first converter device in a full-bridge method, wherein a plurality of additional submodules adjacent to each other are connected in parallel with each other, and the plurality of additional submodules converts DC power of the input terminal into AC power having a voltage level lower than a voltage level of the AC power output from the first converter device.

3. The modular multilevel converter of claim 2, further comprising:
a controller configured to control power conversion of the first low-voltage converter device and the second low-voltage converter device.

4. The modular multilevel converter of claim 1, wherein the first converter device is a bidirectional converter configured to convert the AC power input to the first output terminal into preset DC power and to output the preset DC power to the input terminal, when the AC power is input to the first output terminal.

5. The modular multilevel converter of claim 1, wherein the first converter device and the second converter device convert and output the DC power of the input terminal into three-phase AC power with different voltage levels.

6. A power system comprising:
a first modular multilevel converter having multiple output terminals;
a propulsion motor configured to receive AC power from a first output terminal among the multiple output terminals;
a low-voltage alternating current (LVAC) distribution configured to receive AC power from a second output terminal among the multiple output terminals; and
a medium-voltage direct current (MVDC) distribution configured to supply DC power to the first modular multilevel converter.

7. The power system of claim 6, wherein a voltage level of the AC power output through the second output terminal is lower than a voltage level of the AC power output through the first output terminal.

8. The power system of claim 6, wherein the DC power supplied to the first modular multilevel converter through the MVDC distribution is generated directly or indirectly by at least one of an energy storage system, a fuel cell system, or a generator.

9. The power system of claim 8, further comprising:
a second modular multilevel converter configured to electrically connect the generator and the MVDC distribution,
wherein the second modular multilevel converter has at least one output terminal.

10. The power system of claim 9, wherein the second modular multilevel converter has a third output terminal for outputting DC power to the MVDC distribution, and a fourth output terminal for outputting AC power to a service load distribution.

11. The power system of claim 9, wherein the second modular multilevel converter has a fifth output terminal for outputting DC power to the MVDC distribution, and a sixth output terminal for outputting DC power to a service load distribution.

12. The power system of claim 11, wherein a voltage level of the DC power output through the sixth output terminal is lower than a voltage level of the DC power output through the fifth output terminal.

13. The power system of claim 6, wherein the second output terminal and the LVAC distribution are electrically connected through an isolation transformer.

14. The power system of claim 13, wherein the isolation transformer is one of a two-winding transformer and a three-winding transformer.

15. The power system of claim 6, further comprising:
a bus tie connected to the MVDC distribution and configured to exchange DC power with another power system.
